(19) **Europäisches Patentamt / European Patent Office / Office européen des brevets**

(11) **EP 2 221 953 B1**

(12) **EUROPEAN PATENT SPECIFICATION**

(45) Date of publication and mention
of the grant of the patent:
**04.01.2017 Bulletin 2017/01**

(51) Int Cl.:
**H02M 1/42** *(2007.01)* **H02M 7/08** *(2006.01)*

(21) Application number: **08858305.9**

(22) Date of filing: **25.11.2008**

(86) International application number:
**PCT/JP2008/003451**

(87) International publication number:
**WO 2009/072249 (11.06.2009 Gazette 2009/24)**

(54) **POWER SUPPLY DEVICE**

STROMVERSORGUNGSVORRICHTUNG

DISPOSITIF D'ALIMENTATION ÉLECTRIQUE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **04.12.2007 JP 2007313269**

(43) Date of publication of application:
**25.08.2010 Bulletin 2010/34**

(73) Proprietor: **Panasonic Corporation**
**Kadoma-shi**
**Osaka 571-8501 (JP)**

(72) Inventors:
• **FUKUNISHI, Takahiro**
**Chuo-ku**
**Osaka, 540-6207 (JP)**

• **HAYASHI, Hirokazu**
**Chuo-ku**
**Osaka, 540-6207 (JP)**

(74) Representative: **Eisenführ Speiser**
**Patentanwälte Rechtsanwälte PartGmbB**
**Postfach 10 60 78**
**28060 Bremen (DE)**

(56) References cited:
**WO-A1-2007/135223    JP-A- 2001 268 913**
**JP-A- 2003 088 133    JP-A- 2003 284 343**
**JP-A- 2005 130 643    JP-A- 2007 060 856**
**US-A1- 2003 053 324**

**Description**

TECHNICAL FIELD

The present invention relates to a power supply apparatus capable of converting a three-phase alternating current power supply to a direct current, as well as reducing a harmonic current that flows through the three-phase alternating current power supply and improving an input power factor.

BACKGROUND ART

A power supply apparatus that caries out so-called three-phase full wave rectification in combination with a bridge rectifier circuit configured by six diodes and a direct current reactor provided on the side of a direct current output of the bridge rectifier circuit has been widely and commonly known as a basic power supply apparatus that converts a three-phase alternating current into a direct current. However, it is not possible to improve a power factor more than a certain degree with such a simple power supply apparatus, and an adverse effect to the system by a produced harmonic current has also been noted. Accordingly, in recent years, in order to improve the power factor and reduce the harmonic current, it has been developed a power supply apparatus that approximates the current of the three-phase alternating current power supply to a sine wave and converts the alternating current to a direct current.

Such a power supply apparatus often employs a method mainly of driving a switching device at several kilohertz to more than 10 kilohertz, carrying out a high-speed control of a current that flows through the switching device, and causing the current to follow a desired waveform of a reference sine wave. However, this method involves a large number of component parts, thus making control means complex, and problems such as generation of noise and an increased cost have been noted.

On the other hand, in a power supply apparatus that does not use a switching device, an alternate current reactor is inserted on the side of an alternate current input as commonly used means for a power factor improvement and a harmonic reduction. However, it is necessary to set an inductance of the alternate current reactor to about several dozen mH in order to accommodate the device to harmonic current regulation in different countries. In this case, there are problems that a direct voltage decreases to a large extent as a load amount increases, and that an input power factor is deteriorated to a lagging power factor, and therefore a range of application is limited.

Consequently, it is proposed that realization of simplification of a circuit and cost reduction of a power supply apparatus having a switching device, as well as a power supply apparatus of preventing a decrease in a direct voltage and deterioration of a power factor under high load compared to a simple application of an alternate current reactor and of reducing the harmonic current (hereinafter referred to as a high power factor power supply apparatus).

As a high power factor power supply apparatus for improving the power factor and reducing the harmonic current configured by assembling the conventional passive component parts, for example, it has been proposed a power supply apparatus provided with a bridge rectifier circuit configured by six diodes that are connected to a three-phase alternating current power supply, three capacitors that are respectively connected in parallel to three of the diodes of the bridge rectifier circuit on the side of positive output, and three reactors that are provided respectively between alternating current input terminals of a diode bridge and the three-phase alternating current power supply and that form resonant circuits of frequencies equal to the frequency of the three-phase alternating current power supply respectively between the reactors and the three capacitors (see Japanese Unexamined Patent Publication No. 2002-369530, for example).

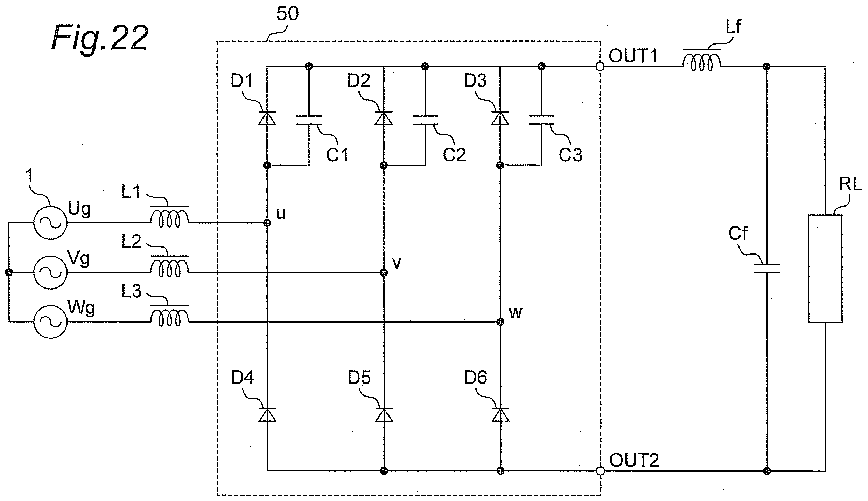

In the following, the conventional high power factor power supply apparatus will be described with reference to the drawing. Fig. 22 is a diagram illustrating a structure of the conventional high power factor power supply apparatus that obtains a direct current from the three-phase alternating current power supply disclosed in Japanese Unexamined Patent Publication No. 2002-369530. A diode bridge 50 of the high power factor power supply apparatus is configured by three diodes D1, D2, and D3 on the side of the positive output and three diodes D4, D5, and D6 on the side of the negative output. Further, the diodes D1, D2, and D3 on the side of the positive output are respectively connected with capacitors C1, C2, and C3.

A first reactor L1 is inserted in series between a U phase power supply Ug of a three-phase alternating current power supply 1 including a U phase, a V phase, and a W phase and a first the power input terminal u of a diode bridge 50 (a connection point between an anode of the diode D1 and a cathode of the diode D4). Similarly, a second reactor L2 is inserted between a V phase power supply Vg and a second power input terminal v (a connection point between an anode of the diode D2 and a cathode of the diode D5). Further, a third reactor L3 is inserted between a W phase power supply Wg and a third power input terminal w (a connection point between an anode of the diode D3 and a cathode of the diode D6).

The diode bridge 50 is connected to an output terminal OUT1 on the side of the positive output of the diode bridge 50, and to an output terminal OUT2 on the side of the negative output of the diode bridge 50. When the output terminal OUT2 is grounded, the direct voltage of the power supply apparatus becomes positive. The direct voltage is smoothed, for example, by a smoothing circuit that is configured by a reactor Lf and a capacitor Cf, and supplied to a resistive load RL.

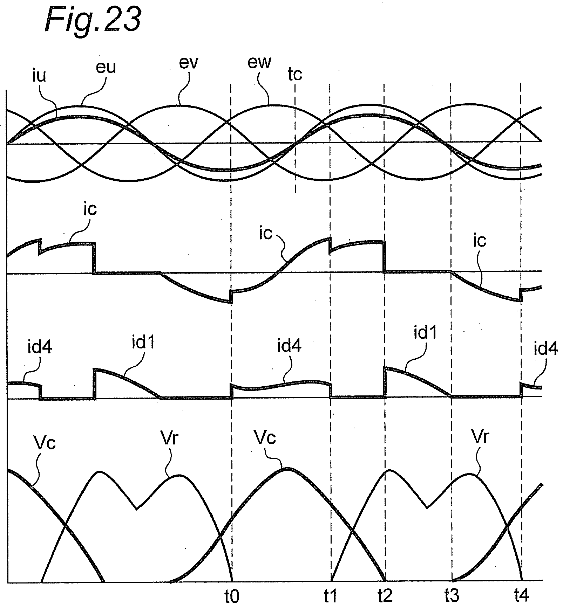

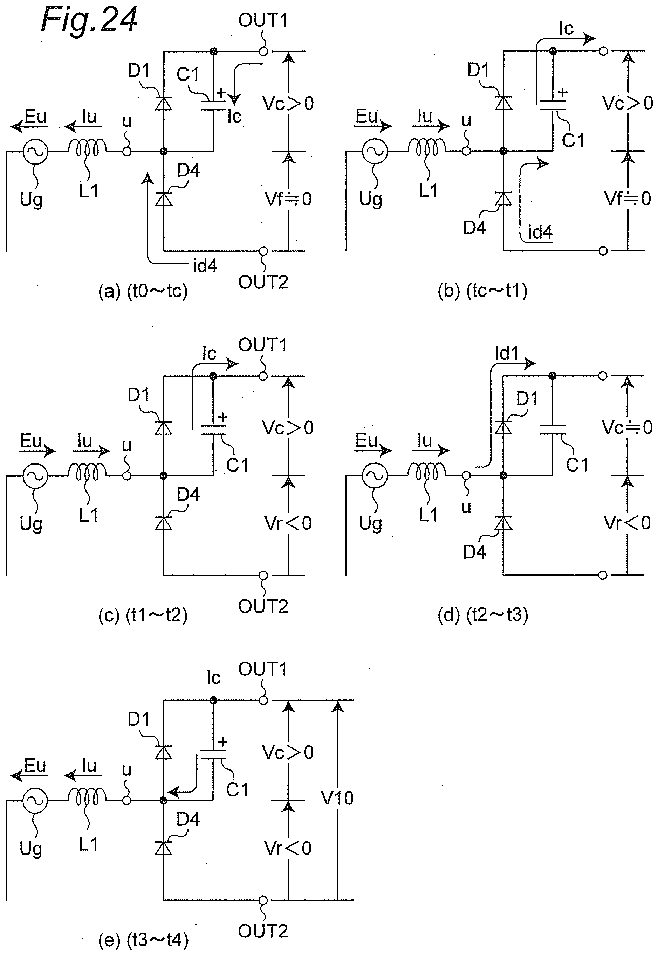

In the conventional high power factor power supply apparatus as configured above, currents iu, iv, and iw of the corresponding phases that respectively flow through the power input terminals u, v, and w by the power supplies Ug, Vg, and Wg of the corresponding phases of the three-phase alternating current power supply 1 are turned into a current in the sine wave regardless of rectification by the diode D1 to the diode D6. The current in the sine wave is now described taking a case of the U phase. Fig. 23 is a waveform chart for illustrating currents that flow through the first power input terminal u, the diodes D1 and D4, and the capacitor C1 of the diode bridge 50 at the U phase by the U phase power supply Ug, and a power supply waveform of the three-phase alternating current power supply 1. Further, Fig. 24 is a diagram showing a current path for illustrating the U phase current iu by the U phase power supply Ug. Here, output voltages from the power supplies Ug, Vg, and Wg of the corresponding phases (hereinafter, "U phase voltage, V phase voltage, and W phase voltage") eu, vu, and wu are expressed respectively by an expression (1), an expression (2), and an expression (3) as shown below.

$$eu = Em \times \sin\omega t \qquad (1)$$

$$ev = Em \times \sin(\omega t - 2\pi/3) \qquad (2)$$

$$ew = Em \times \sin(\omega t - 4\pi/3) \qquad (3)$$

In the expression (1), the expression (2), and the expression (3), a reference symbol Em represents a maximum value of the voltage at each phase, the unit of an angle is radian, a reference symbol $\omega$ represents a frequency of each phase of the three-phase alternating current power supply 1, and a reference symbol t represents time.

As shown in Fig. 23, when the U phase voltage eu is negative, the V phase voltage ev is positive and the W phase voltage ew is positive, and a time at which the U phase voltage eu substantially takes a negative maximum value represents a time t0. Accordingly, as shown in (a) of Fig. 24, the diode D4 becomes conductive at the time t0 and a current id4 flows from the side of the negative output. A forward direction voltage drop Vf at the diode D4 is considered to be substantially 0 volts.

On the other hand, the diode D1 is blocked, an absolute value current Ic of the current ic (hereinafter, the current Ic represents an absolute value of the current ic) flows through the capacitor C1 as a charging current from the side of the positive output, and the capacitor C1 is charged taking the terminal connected on the side of the positive output as a positive electric potential. Accordingly, the current id4 and the current ic constitute the U phase current iu that flows from the power input terminal u to the U phase power supply Ug via the reactor L1, and an absolute value Iu of the U phase current iu (hereinafter, the U phase current Iu represents an absolute value of the U phase current iu) is expressed by an expression (4) as shown below.

$$Iu = id4 + Ic \qquad (4)$$

In the expression (4), in order to make a direction in which current flows clear, the U phase current iu and the current ic of the capacitor C1 are represented by an absolute value (Iu and Ic). Further, an absolute value voltage of the U phase voltage eu is represented by a voltage Eu. In the following, the currents and such are represented by the absolute values for the sake of clarification of the direction of the current flow.

Moreover, a charging voltage of the capacitor C1 is represented by a voltage Vc. As will be described later, the capacitor C1 has already been charged before the time t0. At the time t0 and thereafter, the capacitor C1 is further charged by the current Ic, and the voltage Vc increases up to its maximum value. Then, when the U phase voltage eu becomes positive, as shown in (b) of Fig. 24, the current Ic turns to be a discharging current from the charging current of the capacitor C1. At this time, the U phase current Iu is expressed by an expression (5) as shown below.

$$Iu = Ic - id4 \qquad (5)$$

A time point at which the current Ic turns from the charging current to the discharging current is taken as a time tc. At the time tc, as shown in Fig. 23, the V phase voltage ev is lower than the U phase voltage eu. Consequently, the diode D5 to which the V phase voltage ev is applied gradually becomes conductive, and the current id4 that has been flowing through the diode D4 now flows through the diode D5, and the diode D4 is blocked. A time point at which the diode D4 is blocked in this manner is a time t1. At the time t1, a voltage between an anode and a cathode of the diode D4 becomes a reverse voltage. Assuming the reverse voltage is Vr, the reverse voltage Vr is negative.

In this manner, a resonant current that resonates with a power supply frequency flows through the resonant circuit configured by the reactor L1 and the capacitor C1 during a time period from the time t0 to the time t1. In the following, the resonant circuit that resonates with the power supply frequency is described as the "resonant circuit". As described above, when the time t1 passes, the diode D4 is blocked and the current Ic of the capacitor C1 has already become the discharging current of the voltage Vc. Here, during a time period until the capacitor C1 finishes discharging all the electricity, as shown in (c) of Fig. 24, the cathode of the diode D1 that is connected in parallel to the capacitor C1 is the positive voltage and blocked. Accordingly, during this time period, the U phase current Iu equals to the current Ic as shown in an expression (6) below.

$$Iu = Ic \qquad\qquad (6)$$

When the capacitor C1 eventually finishes discharging, the diode D1 becomes conductive, and the current id1 flows. A time point at which the diode D1 becomes conductive in this manner is a time t2.

On the other hand, during a time period from the time t1 to the time t2, the reverse voltage Vr of the diode D4 gradually increases from 0 V according to a decrease of the voltage Vc due to the discharge of the capacitor C1. As described above, during the time period from the time t1 to the time t2, the resonant current flows through the resonant circuit of the reactor L1 and the capacitor C1.

As described above, when the capacitor C1 finishes discharging and the current id1 flows through the diode D1 (when the time t2 passes), the voltage Vc (the same voltage as the forward direction voltage drop Vf of the diode D1) is substantially at 0 volts. At this time, the U phase current Iu is equal to an absolute value Id1 of the current (hereinafter, the current Id1 represents the absolute value of the U phase current id1), as shown in an expression (7) below. Then, the U phase current iu (the current id1) is supplied from the output terminal OUT1 to the load.

$$Iu = Id1 \qquad\qquad (7)$$

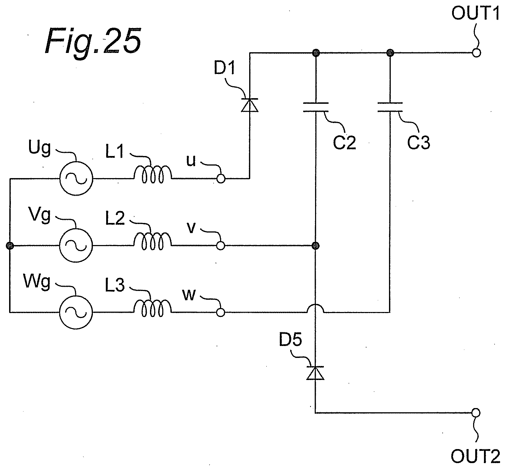

Eventually, the polarities of the U phase current iu are inversed. A time point at which the polarities of the U phase current iu are inversed is represented by a time t3. Fig. 25 is an equivalent circuit diagram illustrating a structure of the resonant circuit in a state as shown in (d) of Fig. 24.

As described above, the reactor L1 and the capacitor C1 do not configure the resonant circuit from the time t2 to the time t3. However, as the diode bridge 50, as shown in Fig. 25, the reactor L2 and the capacitor C2 work as the resonant circuit at the V phase, and the reactor L3 and the capacitor C3 work as the resonant circuit at the W phase. Accordingly, the resonant current at the V phase and the W phase (the currents from the input power terminals v and w) that flow from the power input terminals v and w flow to the power input terminal u via the reactor L1.

As described above, the resonant current flows through the reactor L1 during a time period from the time t2 to the time t3. In Fig. 25, a blocked diode is not shown in the drawing, and only the conductive diodes are illustrated. Further, as the diode D1 is conductive, the capacitor C1 does not work as a capacitor and not shown in the drawing.

Also at the time t3, the polarities of the U phase current iu are inversed and the diode D1 is blocked. Further, as the diode D4 has not yet become conductive even when the time t3 passes, the (charging) current ic flows through the capacitor C1 toward the power input terminal u, and the voltage Vc increases. This current becomes the U phase current iu. Accordingly, during this time period, the U phase current Iu equals to the current Ic as shown in an expression (8) below.

$$Iu = Ic \qquad\qquad (8)$$

On the other hand, the diode D4 is applied with the reverse voltage Vr after the time t1, when the direct voltage generated at the output terminals OUT1 and OUT2 is represented by V10, the direct voltage V10 is as shown in an expression (9) below.

$$V10 = Vc + Vr \hspace{3cm} (9)$$

Here, the direct voltage V10 corresponds to an output of a voltage whose absolute value of an instantaneous voltage is highest among the instantaneous voltages generated at the power input terminals u, v, and w by the U phase voltage eu, the V phase voltage ev, and the W phase voltage ew. Accordingly, the direct voltage V10 is a voltage that links to the U phase voltage eu, as well as the V phase voltage ev and the W phase voltage ew.

Therefore, the reverse voltage Vr that blocks the diode D4 also increases temporarily, linking to the V phase voltage ev and the W phase voltage ew. However, the reverse voltage Vr of the diode D4 eventually decreases down to 0 volts along with an increase of the voltage Vc and a decrease of the direct voltage V10. Then, the polarities of the voltages between the anode and the cathode of the diode D4 are inversed, thereby making the diode D4 conductive. A time point at which the diode D4 becomes conductive is represented by a time t4. At the time t4, the capacitor C1 is successively charged by the current ic.

As described above, during a time period from the time t3 to the time t4, the resonant current flows through the resonant circuit including the reactor L1 and the capacitor C1. Here, an operational state of the diode bridge 50 at the time t4 is the same as an operational state of the diode bridge 50 at the time t0, and the capacitor C1 has already been charged at the time t0 as described above. In this manner, the diode bridge 50 repeats operations in the time periods from the time t0 to the time t4 as described above.

As described above, according to the conventional power supply apparatus, the U phase current iu is turned into a sine wave by the resonant circuit, and the V phase current iv and the W phase current iw are also turned into the currents of a sine wave. Consequently, it is possible to reduce the generation of the harmonic current. In addition, by selecting the inductances of the reactors L1, L2, and L3 and constant numbers of the capacitors C1, C2, and C3 appropriately by load capacity, it is possible to make the input power factor at the rated load substantially 1.

The US 2003/0053324 A1 discloses a power conversion device which comprises a power diode rectifier whose AC terminal is connected through an AC reactor with an AC power source, and voltage-type self-commutated power converters with AC terminals are connected with the AC terminal of the power diode rectifier through a recovery current suppression reactor, and a DC smoothing capacitor connected between a DC common terminal of the voltage-type self-commutated power converter and the power diode rectifier, with a load device connected in parallel therewith. With the power converter, the DC voltage can be stabilized and power regeneration achieved, enabling the problem of absence of regeneration in an electric railway DC power-generation system to be solved.

DISCLOSURE OF THE INVENTION

PROBLEMS TO BE SOLVED BY THE INVENTION

However, according to the structure of the conventional power supply apparatus, in order to satisfy the IEC (International Electrotechnical Commission) harmonic regulation, and in order to select the constant number of the capacitors that are parallelly connected to the reactors and the diodes such that the input power factor at the rated load is 99% or more, the inductance of the reactor is required to be 30 to 40 mH. Therefore, the conventional power supply apparatus poses problems of larger component parts and an increased cost.

The present invention is made in order to address the problems of the conventional power supply apparatus, and an object of the present invention is to provide a power supply apparatus capable of preventing the reactor from being large sized while satisfying the IEC harmonic regulation even when the constant number of the component parts is selected such that the input power factor at the rated load is 99% or more.

MEANS FOR SOLVING THE PROBLEMS

In order to achieve this object, a power supply apparatus according to claim 1 is provided with: a three-phase alternating current power supply; a first diode bridge rectifier circuit that is connected to the three-phase alternating current power supply via first reactors; a second diode bridge rectifier circuit that is connected to alternating current input terminals of the first diode bridge rectifier circuit via second reactors; and a capacitor between each two terminals of alternating current input terminals of the second diode bridge rectifier circuit, thereby reducing a harmonic current and improving an input power factor with a simple structure.

A first aspect according to the present invention provides a power supply apparatus including: a three-phase alternating current power supply; first reactors each provided for a corresponding phase of the three-phase alternating current power supply; a first diode bridge rectifier circuit connected to the three-phase alternating current power supply via the first reactors and provided with a plurality of diodes; and a smoothing capacitor which is connected to direct current output terminals of the first bridge rectifier circuit in parallel, and which supplies direct voltage to a load, wherein the power supply apparatus includes second reactors respectively provided for alternating current input terminals of corresponding phases of the first diode bridge rectifier circuit; and a second diode bridge rectifier circuit having alternating current input terminals which are connected to the alternating current input terminals of the first diode bridge rectifier circuit via the second reactors, wherein the direct current output terminals of the first diode bridge rectifier circuit are further connected to direct current output terminals of the second diode bridge rectifier circuit in parallel, and configured to connect to a load in parallel, and wherein the power supply apparatus further comprises capacitors each of which is connected between each two terminals of the alternating current input terminals of the second diode bridge rectifier circuit, wherein the second reactors and the capacitors are provided between the alternating current input terminals of the first diode bridge rectifier circuit and the alternating current input terminals of the diode second bridge rectifier circuit. With the power supply apparatus according to the first aspect thus configured, it is possible to reduce the harmonic current and to improve the input power factor. In addition, the power supply apparatus according to the first aspect has a small decrease in the direct current output voltage as an equivalent effect of harmonic reduction can be realized even if an inductance value is small.

Particularly, a second aspect according to the present invention provides the power supply apparatus of the first aspect, wherein a switching portion is provided between the first diode bridge rectifier circuit and each of the second reactors. With the power supply apparatus according to the second aspect thus configured, it is possible to switch between operations as a power supply apparatus for the three-phase full wave rectification and as a high power factor power supply apparatus.

Particularly, a third aspect according to the present invention provides the power supply apparatus of the second aspect, including an input current detection portion, wherein the switching portion is configured to be controlled in response to an input current detected by the input current detection portion. With the power supply apparatus according to the third aspect thus configured, it is possible to reduce the harmonic current and to improve the input power factor in a normal operation state, as well as to prevent an increase of the direct voltage under light load, and the resulting decrease of the input power factor and the resulting increase of the harmonic current.

Particularly, a fourth aspect according to the present invention provides the power supply apparatus of the second aspect, including an output power detection portion, wherein the switching portion is configured to be controlled in response to an output power that detected by the output power detection portion. With the power supply apparatus according to the fourth aspect thus configured, it is possible to reduce the harmonic current and to improve the input power factor in the normal operation state, as well as to prevent the increase of the direct voltage under light load, and the resulting decrease of the input power factor and the resulting increase of the harmonic current.

Particularly, a fifth aspect according to the present invention provides the power supply apparatus of the second aspect, including a direct current electricity detection portion that detects a current flowing to the load, wherein the switching portion is configured to be controlled in response to the direct current electricity detected by the direct current electricity detection portion. With the power supply apparatus according to the fifth aspect thus configured, by opening the switching portion, for example, when the detected direct current electricity drops under a predetermined value, it is possible to reduce the harmonic current and to improve the input power factor in the normal operation state, as well as to prevent the increase of the direct voltage under light load, and the resulting decrease of the input power factor and the resulting increase of the harmonic current.

Particularly, a sixth aspect according to the present invention provides the power supply apparatus of the second aspect, including a preliminary charge control portion, wherein the switching portion is configured to be controlled by the preliminary charge control portion so as to reduce a current flowing through the capacitor when switching on the switching portion. With the power supply apparatus according to the sixth aspect thus configured, it is possible to prevent generation of the excessive current that flows through the capacitor when switching the switching portion.

Particularly, a seventh aspect according to the present invention provides the power supply apparatus of the second aspect, wherein a series circuit including an additional capacitor and an additional capacitor switching portion is provided between each two terminals of the alternating current input terminals of the second diode bridge, and the series circuits are connected in parallel with the respective capacitors connected to the alternating current input terminals of the second diode bridge. With the power supply apparatus according to the seventh aspect thus configured, by switching a capacity of the capacitor according to the load, it is possible to prevent the decrease of the direct voltage and to select an appropriate constant number for improving the input power factor and reducing the harmonic current.

Particularly, an eighth aspect according to the present invention provides the power supply apparatus of the seventh aspect, including a direct current voltage detection portion that detects voltages on both ends of the load, wherein the additional capacitor switching portion is configured to be controlled in response to the direct current voltages detected by the direct current voltage detection portion. With the power supply apparatus according to the eighth aspect thus configured, it is possible to prevent the decrease of the direct voltage and the decrease of the input power factor under heavy load.

Particularly, a ninth aspect according to the present invention provides the power supply apparatus of the seventh aspect, including an input current detection portion, wherein the additional capacitor switching portion is configured to be controlled in response to an input current detected by the input current detection portion. With the power supply apparatus according to the ninth aspect thus configured, it is possible to prevent the decrease of the direct voltage and the decrease of the input power factor under heavy load.

Particularly, a tenth aspect according to the present invention provides the power supply apparatus of the seventh aspect, including an output power detection portion, wherein the additional capacitor switching portion is configured to be controlled in response to an output power detected by the output power detection portion. With the power supply apparatus according to the tenth aspect thus configured, it is possible to prevent the decrease of the direct voltage and the decrease of the input power factor under heavy load.

Particularly, an eleventh aspect according to the present invention provides the power supply apparatus of the seventh aspect, including a direct current electricity detection portion, wherein the additional capacitor switching portion is configured to be controlled in response to a direct current electricity detected by the direct current electricity detection portion. With the power supply apparatus according to the eleventh aspect thus configured, it is possible to prevent the decrease of the direct voltage and the decrease of the input power factor under heavy load.

Particularly, a twelfth aspect according to the present invention provides the power supply apparatus of the seventh aspect, including an additional capacitor preliminary charge control portion, wherein the additional capacitor switching portion is configured to be controlled by the additional capacitor preliminary charge control portion so as to reduce a current flowing through the additional capacitor when switching on the additional capacitor switching portion. With the power supply apparatus according to the twelfth aspect thus configured, it is possible to prevent generation of the excessive current that flows through the additional capacitor when switching the additional capacitor switching portion.

Particularly, a thirteenth aspect according to the present invention provides the power supply apparatus of the first aspect, wherein a reactor having a saturation characteristic such that an inductance of the reactor decreases in response to a current flowing through the reactor when the current flowing through the reactor exceeds a predetermined value is used as the first reactor. With the power supply apparatus according to the thirteenth aspect thus configured, it is possible to prevent the decrease of the direct voltage under heavy load.

Particularly, a fourteenth aspect according to the present invention provides the power supply apparatus of the first aspect, wherein a three-phase reactor configured by an iron core and a winding on each of three legs of the iron core is used as the reactor. With the power supply apparatus according to the fourteenth aspect thus configured, it is possible to downsize and reduce the weight of the reactor.

EFFECTS OF THE INVENTION

According to the power supply apparatus of the present invention, with a simple configuration in which three reactors, a single bridge rectifier circuit, and three capacitors are added to a basic three-phase full wave rectification circuit employing three reactors and a single bridge rectifier circuit, it is possible to reduce the harmonic current by making the input current in a sine wave shape as well as to improve the input power factor, and further possible to downsize the reactors in comparison with the conventional high power factor power supply apparatus.

Moreover, the power supply apparatus according to the present invention has a small decrease in the direct current output voltage as an equivalent effect of harmonic reduction can be realized even if an inductance value is smaller than that of the conventional power supply apparatus.

Although the novel characteristics of the present invention are neither more nor less than what is specifically described in the appended scope of the claimed invention, its structure and content can be both better understood and appreciated by reading the following detailed description in combination with other objects and features with reference to the drawings.

BRIEF DESCRIPTION OF THE DRAWINGS

Fig. 1 is a circuit diagram illustrating a structure of a power supply apparatus of a first embodiment according to the present invention.
Fig. 2 is a waveform chart of components of the power supply apparatus of the first embodiment according to the present invention.
Fig. 3 is a waveform chart of different components of the power supply apparatus of the first embodiment according to the present invention.
Fig. 4 is a waveform chart of further different components of the power supply apparatus of the first embodiment according to the present invention.
Fig. 5 is a diagram showing a current path at a time t0 of the power supply apparatus of the first embodiment according to the present invention.

Fig. 6 is a diagram showing a current path from times t1 to t2 of the power supply apparatus of the first embodiment according to the present invention.

Fig. 7 is a diagram showing a current path at the time t2 of the power supply apparatus of the first embodiment according to the present invention.

Fig. 8 is a diagram showing a current path at a time t3 of the power supply apparatus of the first embodiment according to the present invention.

Fig. 9 is a diagram showing a current path at a time t4 of the power supply apparatus of the first embodiment according to the present invention.

Fig. 10 is a diagram showing a current path at a time t5 of the power supply apparatus of the first embodiment according to the present invention.

Fig. 11 is a characteristic chart showing an input power factor to an input power in the power supply apparatus of the first embodiment according to the present invention.

Fig. 12 is a characteristic chart showing a harmonic current to the input power in the power supply apparatus of the first embodiment according to the present invention.

Fig. 13 is a waveform chart of an input voltage and an input current at the rated load in the power supply apparatus of the first embodiment according to the present invention.

Fig. 14 is a circuit diagram illustrating a structure of a power supply apparatus of a second embodiment according to the present invention.

Fig. 15 is a chart showing an operation of a switching portion and a change to the input power factor in the power supply apparatus of the second embodiment according to the present invention.

Fig. 16 is a circuit diagram illustrating a structure of a power supply apparatus of a third embodiment according to the present invention.

Fig. 17 is a characteristic chart showing an input current to an input power in the power supply apparatus of the first embodiment according to the present invention.

Fig. 18 is a circuit diagram illustrating a structure of a power supply apparatus of a fourth embodiment according to the present invention.

Fig. 19 is a circuit diagram illustrating a structure of a power supply apparatus of a fifth embodiment according to the present invention.

Fig. 20 is a circuit diagram illustrating a structure of a power supply apparatus of a sixth embodiment according to the present invention.

Fig. 21 is a circuit diagram illustrating a structure of a power supply apparatus of a seventh embodiment according to the present invention.

Fig. 22 is a circuit diagram illustrating a structure of a conventional power supply apparatus.

Fig. 23 is a waveform chart of components of the conventional power supply apparatus.

Fig. 24 is a diagram showing a current path of the conventional power supply apparatus.

Fig. 25 is an equivalent circuit diagram in which a blocked diode in the conventional power supply apparatus is not shown.

BEST MODES FOR CARRYING OUT THE INVENTION

In the following, preferred embodiments according to the present invention will be described in detail with reference to the appended drawing. However, the present invention is not limited to structures described in the following embodiments, but can include structures based on the same technical idea.

(First Embodiment)

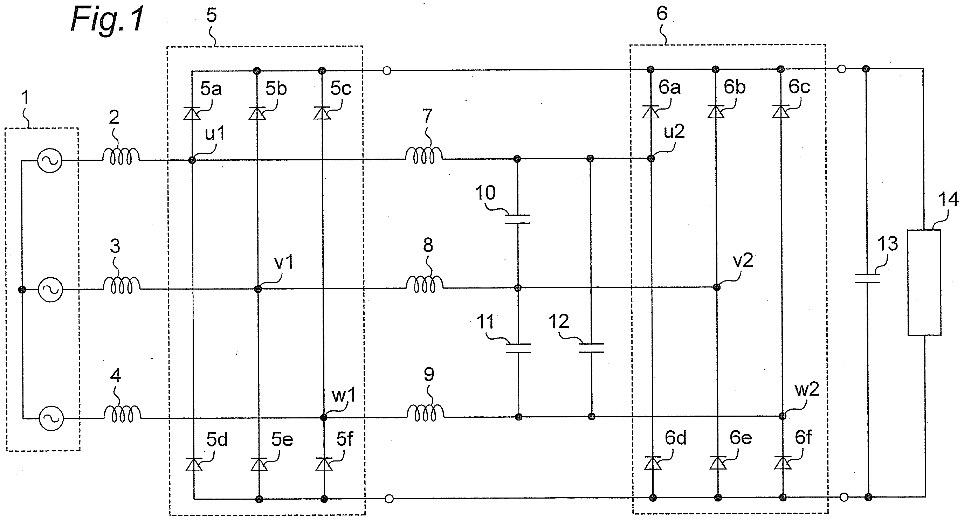

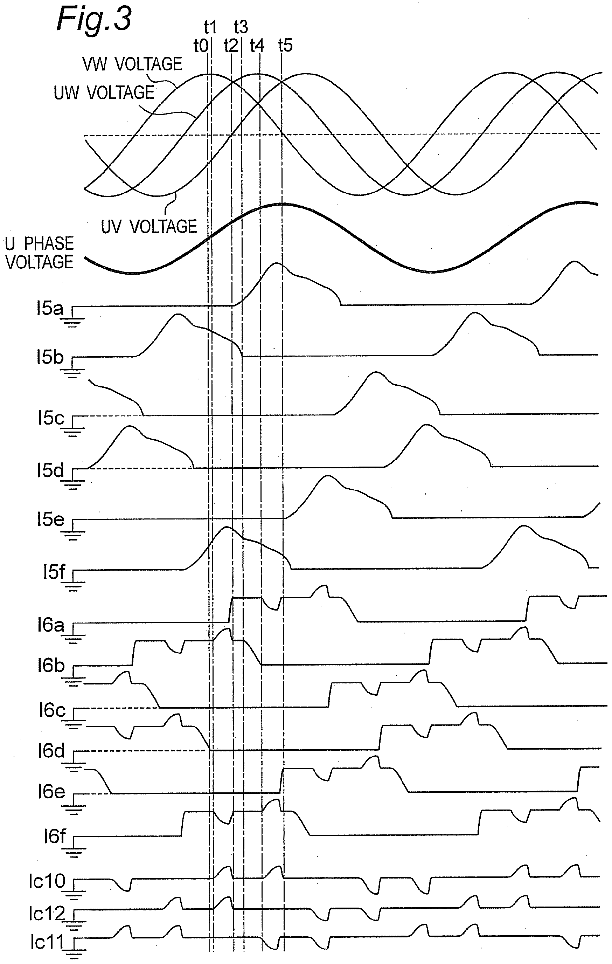

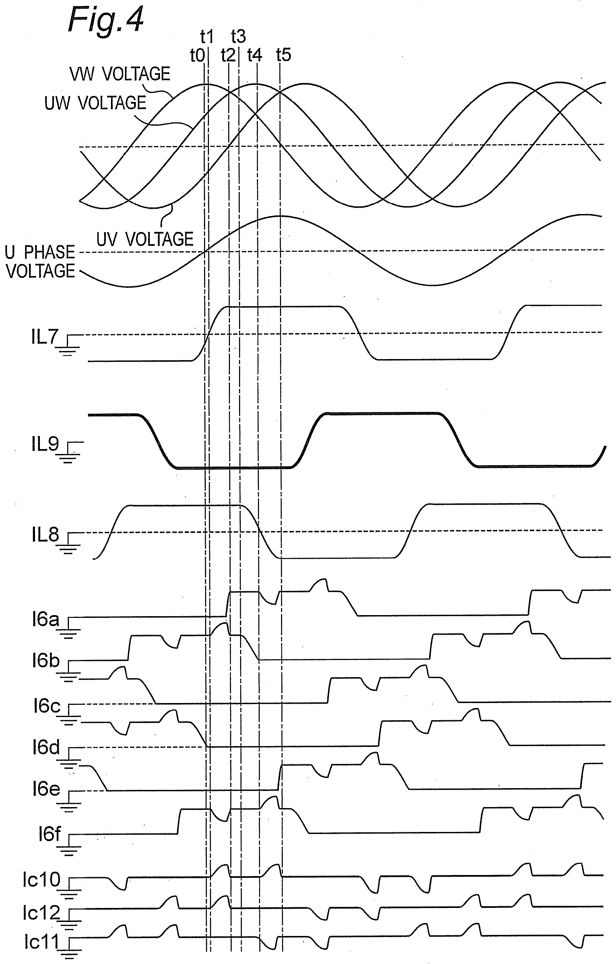

The following describes a power supply apparatus of a first embodiment according to the present invention with reference to Fig. 1 to Fig. 13. Fig. 1 is a circuit diagram illustrating a structure of the power supply apparatus of the first embodiment according to the present invention.

Referring to Fig. 1, a three-phase alternating current power supply 1 is a commercial power supply whose output terminals at a U phase, a V phase, and a W phase are respectively connected to reactors 2, 3, and 4. Hereinafter, the U phase, the V phase, and the W phase refer to the corresponding output terminals of the three-phase alternating current power supply 1, and a UV voltage, a VW voltage, and a UW voltage also refer to line voltages between the corresponding output terminals of the three-phase alternating current power supply 1.

As shown in Fig. 1, the reactors 2, 3, and 4 are connected to alternating current input terminals u1, v1, and w1 of a first diode bridge 5 as a first bridge rectifier circuit that is configured by six diodes 5a, 5b, 5c, 5d, 5e, and 5f. Further, the power supply apparatus of the first embodiment is provided with a second diode bridge 6 as a second bridge rectifier circuit that is parallelly connected to the first diode bridge 5. The second diode bridge 6 is configured by six diodes 6a, 6b, 6c, 6d, 6e, and 6f.

Reactors 7, 8, and 9 are connected between the alternating current input terminals u1, v1, and w1 of the first diode bridge 5 and alternating current input terminals u2, v2, and w2 of the second diode bridge 6. Capacitors 10, 11, and 12 are respectively connected between corresponding lines of the alternating current input terminals u2, v2, and w2 of the second diode bridge 6.

A direct current output terminal of the first diode bridge 5 and a direct current output terminal of the second diode bridge 6 are connected in parallel. Further, the first diode bridge 5 and the second diode bridge 6 are connected in parallel with an electrolytic capacitor 13 as a smoothing capacitor, and configured to supply a direct voltage to a load 14.

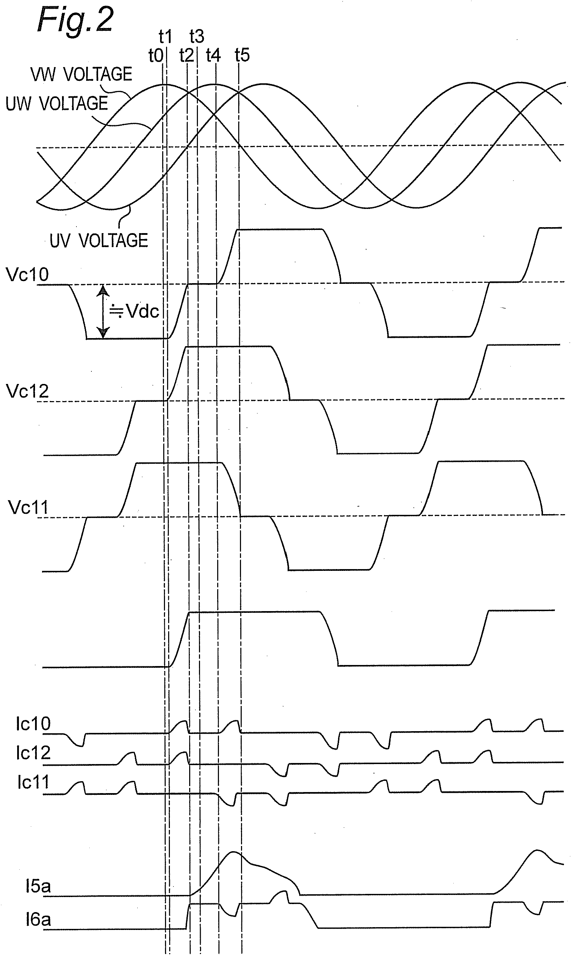

An operation of the power supply apparatus of the first embodiment as configured above will be described with reference to Fig. 2 to Fig. 10, taking the U phase as a typical example.

Fig. 2, Fig. 3, and Fig. 4 show operational waveforms of components in the power supply apparatus of the first embodiment.

Referring to Fig. 2, Fig. 3, and Fig. 4, the UV voltage, the VW voltage, and the UW voltage respectively are the line voltages of the output terminals of the three-phase alternating current power supply 1, the UV voltage and the UW voltage are shown with the side of the U phase positive, and the VW voltage is shown with the side of the V phase positive. Reference symbols Vc10, Vc11, and Vc12 in Fig. 2 respectively represent inter-terminal voltages of the capacitors 10, 11, and 12, and their polarities are shown with the same side as the line voltages positive.

In Fig. 2, Fig. 3, and Fig. 4, reference symbols Ic10, Ic11, and Ic12 respectively represent currents that flow through the capacitors 10, 11, and 12. The currents that flow through the corresponding capacitors 10, 11, and 12 are shown with the side to which the currents flow to the capacitors 10, 11, and 12 from the positive polarities of the line voltages positive.

Further, in Fig. 2, Fig. 3, and Fig. 4, reference symbols I5a, I5b, I5c, I5d, I5e, I5f, I6a, I6b, I6c, I6d, I6e, and I6f respectively represent currents that flow through the diodes 5a, 5b, 5c, 5d, 5e, and 5f of the first diode bridge 5 and the diodes 6a, 6b, 6c, 6d, 6e, and 6f of the second diode bridge 6.

For the UV voltage, the VW voltage, and the UW voltage shown in Fig. 2, Fig. 3, and Fig. 4, a zero point at which the U phase voltage turns from negative to positive, that is, a time point at which the VW voltage indicates a positive maximum value represents a time t0, and a time period after the time t0 to a time point at which VW voltage reaches zero is divided by times t1 to t5. The following describes a state transition at each time point.

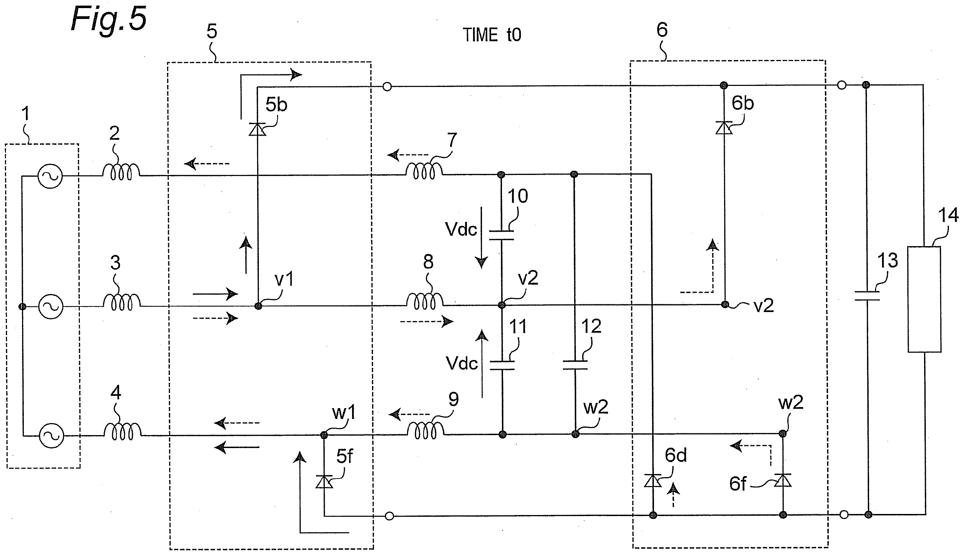

Fig. 5 to Fig. 10 show equivalent circuit diagrams showing a simplified circuit structure of the power supply apparatus from the time t0 to the time t5. In Fig. 5 to Fig. 10, a diode that is not conductive is not shown. Further, a direction of the current that flows to the electrolytic capacitor 13 and the load 14 via the first diode bridge 5 is indicated by an arrow in a solid line, and a direction of the current that flows to the electrolytic capacitor 13 and the load 14 via the second diode bridge 6 is indicated by an arrow in a dotted line.

In the following description, a path through which the current is supplied to the electrolytic capacitor 13 and the load 14 via the first diode bridge 5 is referred to as a "main current path", and a path through which the current is supplied to the electrolytic capacitor 13 and the load 14 via the second diode bridge 6 is referred to as an "auxiliary current path".

In the following, a state of the power supply apparatus of the first embodiment at the time t0 is described referring to the equivalent circuit diagram illustrated in Fig. 5.

At the time t0, the VW voltage is maximum and greater than Vdc representing the inter-terminal voltage of the electrolytic capacitor 13. In the first diode bridge 5, the diode 5b and the diode 5f become conductive, and the main current path is formed.

On the other hand, as will be later described, at the time t0, the capacitor 11 has already been substantially charged to a voltage of Vdc, and the diode 6b and the diode 6f are conductive in the second diode bridge 6. Further, 60° before the time t0, that is, at a time point at which the UV voltage reaches a negative maximum value, the capacitor 10 has also already been substantially charged to a voltage of Vdc on the negative side, and as the current flows through the auxiliary current path via the diode 6b, the electrolytic capacitor 13, the diode 6d, and the reactor 7, from the reactor 8, the current keeps flowing due to energy accumulation between the reactor 7 and the reactor 8, thus, the diode 6d is being conductive at the time t0.

Accordingly, as any of the diodes connected to the capacitors 10, 11, and 12 is being conductive, the voltages of the capacitors 10, 11, and 12 are such that, when taking a voltage drop of the diode is substantially 0 volts, the capacitor 10 is substantially charged by the voltage Vdc to the negative side as shown in Fig. 2, and the capacitor 11 is substantially charged by the voltage Vdc to the positive side. Further, the voltages on both end of the capacitor 12 become substantially equal, that is, substantially 0 volts.

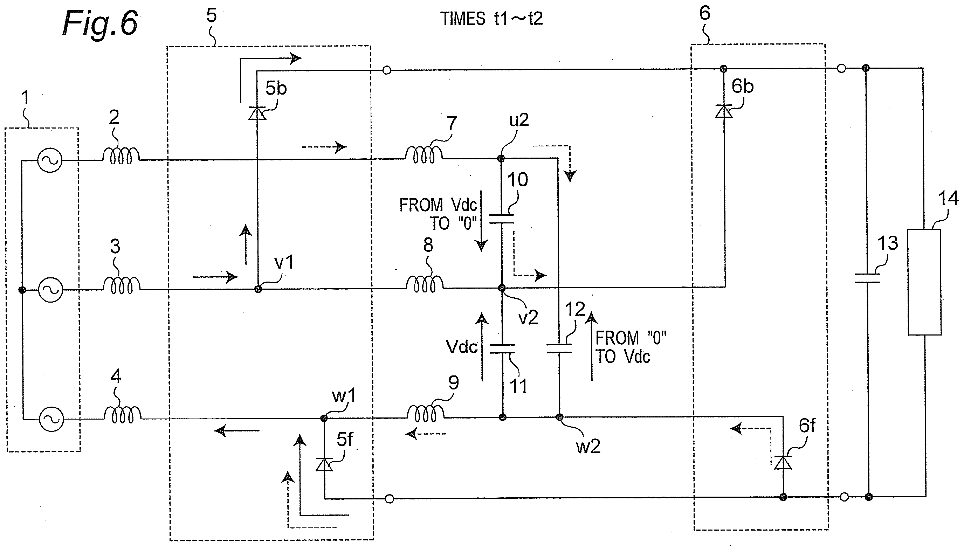

The current that flows through the auxiliary current path via the diode 6b, the electrolytic capacitor 13, the diode 6d, and the reactor 7 from the reactor 8 decreases, eventually down to zero. When the current that flows through the auxiliary current path becomes zero, the diode 6d stops to be conductive, and the power supply apparatus of the first embodiment turns to a state of an equivalent circuit as shown in Fig. 6. The state at this point corresponds to the time t1.

A change in the current that flows through the second diode bridge 6 will be now described focusing on the voltages of the capacitor 10 and the capacitor 12.

As described above, as the diode 6d stops to be conductive at the time t1, the alternating current input terminal u2 at the U phase connected to the diode 6d becomes indefinite. At this time, the capacitor 10 is charged by the voltage of substantially Vdc with the side of the V phase of the alternating current input terminal v2 positive. Further, as the UW voltage is positive, the voltage between the alternating current input terminal v2 at the V phase and the alternating current input terminal w2 (W phase power supply) at the W phase is greater than Vdc, and the current flows through the reactor 7, the capacitor 10, the diode 6b, the electrolytic capacitor 13, the diode 5f, and the reactor 4 from the reactor 2, and the capacitor 10 is discharged. As the inter-terminal voltage Vdc of the electrolytic capacitor 13 is a voltage that is substantially constant, a gradient of the current that flows through the capacitor 10 in this case depends on a resonance frequency due to capacities of the reactor 2, the reactor 7, and the capacitor 10. Through the diode 6b, a current which is a total current of the discharging current of the capacitor 10 and the substantially constant current that flows through the reactor 8 flows.

By the discharge of the capacitor 10, the voltages on both ends of the capacitor 10 are directed to 0 volts. Specifically, the voltages at the alternating current input terminal u2 at the U phase and the alternating current input terminal v2 at the V phase are directed to become equal. Accordingly, the capacitor 12 that is substantially at 0 volts is charged up to the same voltage as that of the capacitor 11, that is, up to the voltage of substantially Vdc.

The path of the charging current at this time is the reactor 2, the reactor 7, the capacitor 12, the reactor 9, and the reactor 4. As the current that flows through the reactor 9 is substantially in a constant current operation due to reasons as will be described later, the gradient of the charging current at this time depends on a resonance frequency due to capacities of the reactor 2, the reactor 7, and the capacitor 12. As the charging current is included in the substantially constant current that flows through the reactor 9, while not flowing through the second diode bridge 6, the current that flows via the diode 6f shows a waveform of a current resulting by deducting the charging current of the capacitor 12 from the substantially constant current.

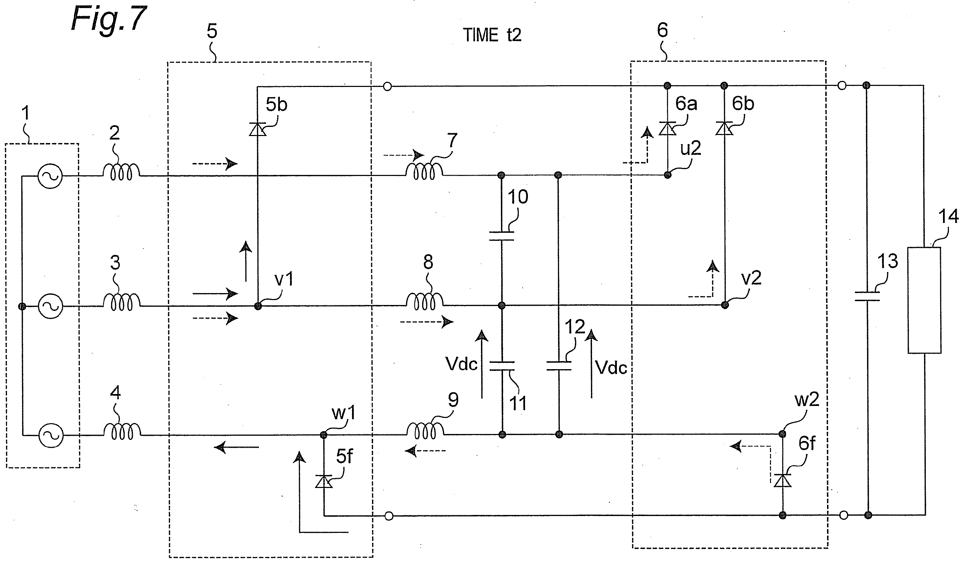

Then, when the capacitor 12 is charged up to the voltage of substantially Vdc, the diode 6a becomes conductive and an equivalent circuit shown in Fig. 7 is formed. This time point is represented by the time t2. As the voltage Vdc on both ends of the electrolytic capacitor 13 decreases due to the load 14, the current flows from the diode 6a that has become conductive to the electrolytic capacitor 13 at the same time as the capacitor 12 is charged, and the current flows via the reactor 7 such that the voltages of the capacitor 12 and the electrolytic capacitor 13 become equal at the voltage of Vdc. A current waveform until the capacitor 12 is charged shows a gradient that depends on a resonance frequency due to capacities of the reactor 7 and the capacitor 10.

At this time point, a constant current flows through the reactor 8. Here, it is described that the current that flows through the reactor 8 is substantially in the constant current operation in the auxiliary current path.

At this time point, the diode 5b and the diode 6b that are connected to the alternating current input terminal v1 and the alternating current input terminal v2 at the V phase as both ends of the reactor 8 are both conductive, and assuming that the voltage drop due to the diode 5b and the voltage drop due to the diode 6b are substantially equal, the voltages at the both ends of the reactor 8 are equal and the voltage drop due to the reactor 8 is assumed to be 0 volts.

It is known that voltages at both ends of a reactor are expressed by an expression (10) as shown below.

$$VL = L \times di/dt \qquad\qquad (10)$$

In the expression (10), a reference symbol VL represents voltages at both ends of a reactor, a reference symbol L represents an inductance of the reactor, and a reference symbol i represents a current that flows through the reactor. Therefore, at this time, di/dt = 0, which is the constant current operation.

On the other hand, in a charging operation of the capacitor 11, the charging operation similar to the capacitor 12 as described above is carried out by the current flowing though the reactor 8. Consequently, when the charging operation of the capacitor 11 is completed, that is, when the diode 6b becomes conductive, the current that flows through the reactor 8 takes a current value during the constant current operation.

As described above, there are two modes of the current that flows through the reactor in the auxiliary current path: a current mode of depending on a resonance frequency due to capacities of the reactor and a capacitor when charging or discharging the capacitor (hereinafter referred to as a charge-discharge mode), and a constant current mode utilizing the fact that any two of the three phases become conductive due to a diode (hereinafter referred to as the constant current mode).

Further, the constant current mode is based on a condition that the diode in the second diode bridge 6 is conductive, that is, based on a condition that the power supply voltage is greater than the terminal voltage Vdc of the smoothing capacitor 13, and further on a condition that the current flows to the load 14. Consequently, the constant current mode is not present in a no load state, that is, in a state in which the terminal voltage Vdc of the electrolytic capacitor 13 as the smoothing capacitor is equal to the maximum value of the power supply voltage, and it is shown that the resonant current due to the reactor and the capacitor flows in the auxiliary current path.

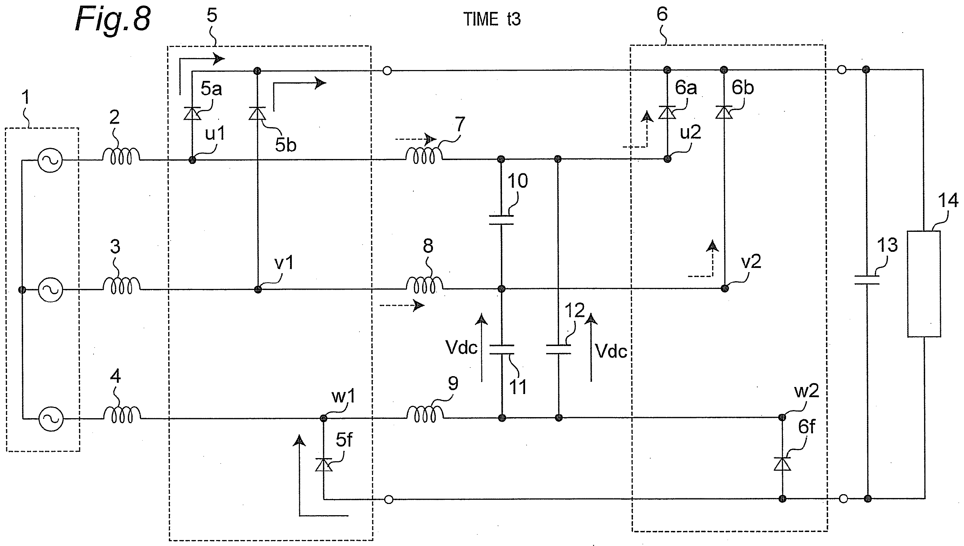

Next, when the UW voltage becomes greater than the Vdc, a delay is caused due to the reactor 2, the diode 5a becomes conductive, and the current flows in the main current path configured by the electrolytic capacitor 13 and the diode 5f. A time point at this time is taken as the time t3. Fig. 8 shows an equivalent circuit at the time t3 of the power supply apparatus of the first embodiment. As shown in Fig. 8, at the time t3, all of the diodes 5a, 5b, 6a, and 6b at the both ends of the reactor 7 and the reactor 8 are conductive, and the currents that flow through the reactor 7 and the reactor 8 are in the constant current mode.

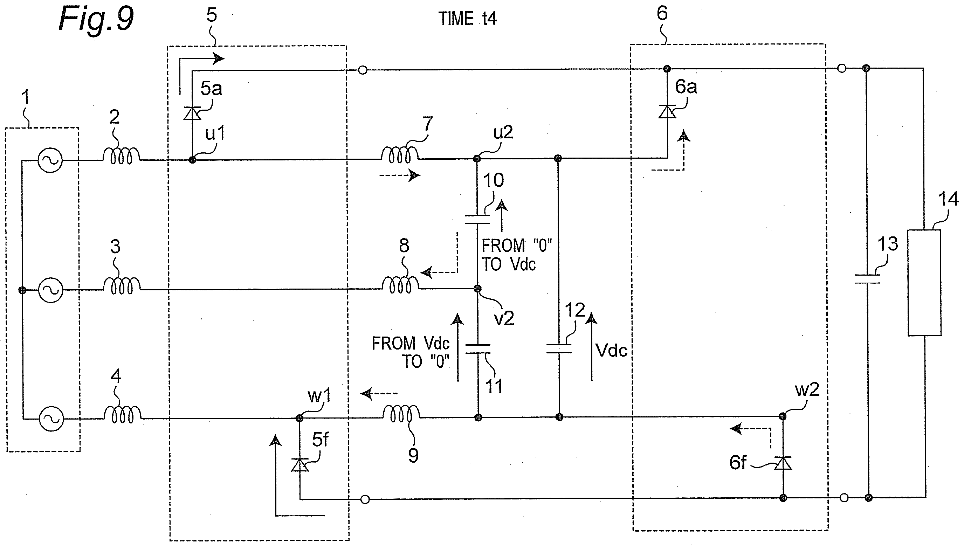

Then, while the VW voltage becomes smaller than the Vdc, the current keeps flowing due to an energy accumulation in the reactor 3. Eventually, when the current reaches zero with the delay, the diode 5b is blocked. Subsequently, the current that has been flowing through the diode 6b decreases eventually with the delay due to an energy accumulation in reactor 8. When the current eventually reaches zero, the diode 6b is blocked similarly to the diode 5b. A time point at this time is taken as the time t4. Fig. 9 shows an equivalent circuit at the time t4 of the power supply apparatus of the first embodiment.

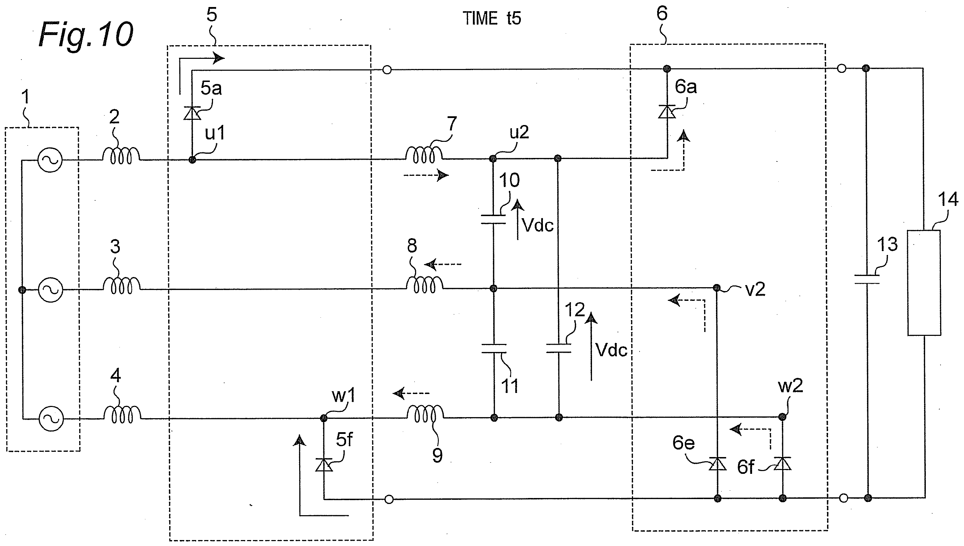

Similarly to the case described with reference to Fig. 6, for the alternating current input terminal v2 at the V phase, the current in the charge-discharge mode starts to flows through the reactor 8 such that the capacitor 10 is charged and the capacitor 11 is discharged. As a result, the capacitor 10 is charged up to the voltage of Vdc, and the diode 6e becomes conductive. A time point at this time is taken as the time t5. Fig. 10 shows an equivalent circuit at the time t5 of the power supply apparatus of the first embodiment.

The equivalent circuit shown in Fig. 10 is such that the U phase and the V phase are interchanged in the equivalent circuit at the time t0 described with reference to Fig. 5. Therefore, after the state shown in Fig. 10, transition occurs in the state in which the U phase and the V phase are interchanged, and the description after this state is omitted.

As described above, in the power supply apparatus of the first embodiment according to the present invention, utilizing the auxiliary current path that is configured by the reactor, the capacitor, and the diode bridge, the current flows by the charging operation in the charge-discharge mode from the state in which the U phase voltage is zero. Accordingly, a conduction interval in which the current flows in the power supply can be broadened, and it is advantageously possible to improve the power factor.

Further, in the power supply apparatus of the first embodiment according to the present invention, the current that flows in the auxiliary current path is kept constant and the remaining current is caused to flow in the main current path in the constant current mode. Accordingly, the rated current in the reactor provided in the auxiliary current path can be decreased more than that in the reactor provided in the main current path. Therefore, with the power supply apparatus of the first embodiment, it is possible to downsize the component parts even when the inductance is desired to be large.

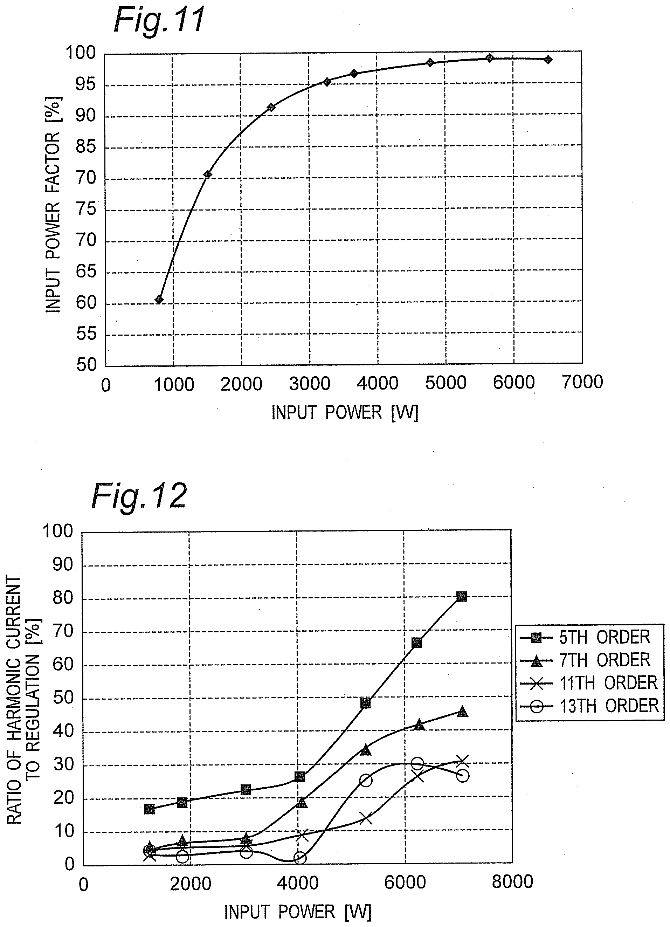

Fig. 11 is a characteristic chart showing relation between the input power (W) and the input power factor (%), in the power supply apparatus of the first embodiment, where a rated electrical power is 6.5 kW when an input frequency is 50 Hz and an input line voltage is 398 V respectively of the three-phase alternating current power supply 1, and where the inductances of the reactors 2, 3, and 4 in the main current path are 15 mH, the inductances of the reactors 7, 8, and 9 in the auxiliary current path are 20 mH, the capacitors 10, 11, and 12 are a capacity 5 uF, and the electrolytic capacitor 13 is a capacity 840 uF. As can be seen from Fig. 11, in the power supply apparatus of the first embodiment, the input power factor that is 95% or greater is secured even when the input power factor near the rated electrical power is set to be 99% or greater and a load factor is 1/2. It should be noted that a rated input power that is the basis of the calculation for the load factor is 6500 W.

As described above, a circuit operation in the power supply apparatus of the first embodiment has been described in the aspect of the input power factor. Next, an effect of reduction of the harmonic current is described.

Fig. 12 is a characteristic chart showing relation between the input power (W) and a ratio of the harmonic current to an IEC harmonic current regulation value (ratio of the harmonic current to the regulation (%)) in the power supply apparatus of the first embodiment. Regarding the characteristic shown in Fig. 12, conditions such as constant numbers of the components of the power supply apparatus are the same as the case in Fig. 11 as previously described. Fig. 12 shows the harmonic currents of four orders whose ratio of the harmonic current to the regulation value is the largest to the fourth largest. The harmonic current other than the harmonic currents of the four orders shown in Fig. 12 is smaller than the harmonic currents shown in Fig. 12 and does not cause any problem. According to the characteristic chart shown in Fig. 12, a fifth order harmonic whose ratio to the regulation value is the largest is 80% at maximum, and still includes a 20% of margin to the regulation value.

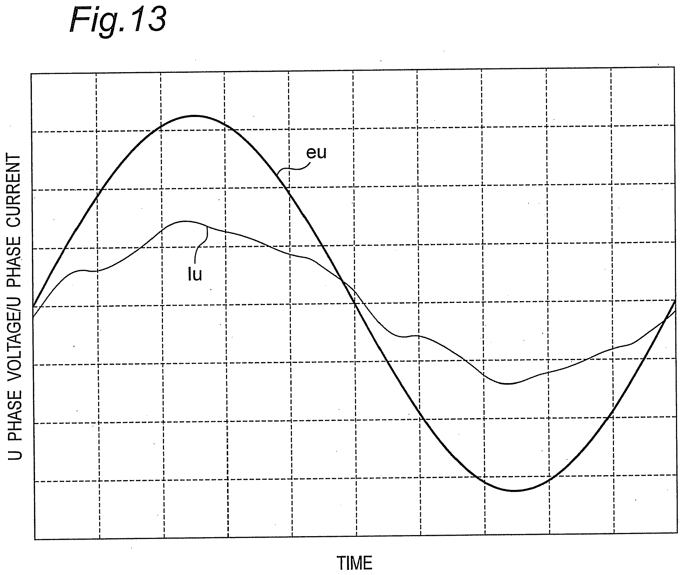

Fig. 13 shows a waveform of the U phase voltage eu at an input of 6.5 kW for the constant number as above set and the U phase current Iu in the power supply apparatus of the first embodiment. As can be seen from Fig. 13, according to the power supply apparatus of the first embodiment, as the phases of the current and the voltage are substantially the same and the current waveform is in a sine wave shape, the improvement of the input power factor and the reduction of the harmonic current can be realized at the same time.

In the following, an effect of the improvement of the input power factor and downsizing of the reactor will be described, comparing the power supply apparatus of the first embodiment and a conventional power supply apparatus.

According to the conventional power supply apparatus, similarly to the power supply apparatus of the first embodiment, the inductance of the reactor is required to be about 30 mH, in order to secure 10% or greater of margin to the harmonic regulation where the input power factor of constant number setting with the input voltage of 398 V and the rated electrical power of 6.5 kW is 99% or greater under the rated load. On the other hand, according to the power supply apparatus of the first embodiment, it is possible to reduce to half, as the inductance of the reactors 2, 3, and 4 in the main current path is 15 mH.

It should be noted that, according to the power supply apparatus of the first embodiment, the inductance in the auxiliary current path is increased to 35 mH, the current that flows in the auxiliary current path is restricted to the constant current by the constant current operation as described above, and the rated current can be smaller than that in the main current path. Accordingly, it is possible to decrease a diameter of a winding, thereby allowing to downsize the component size.

Moreover, according to the conventional power supply apparatus, there is a large decrease in an input power factor due to a decrease in the load factor, as the input power factor is about 90% at the load factor of 1/2 under an influence of a leading phase current of the capacitor under light load.

As described above, according to the power supply apparatus of the first embodiment, it is possible to realize the improvement of the input power factor and the reduction of the harmonic current with a downsized reactor in comparison with the conventional power supply apparatus. It is also possible to improve the decrease in the input power factor under light load.

According to the power supply apparatus of the first embodiment, inductance characteristics of the reactors 2, 3, and 4 in the main current path are not particularly described. However, the reactors 2, 3, and 4 can be configured as so-called supersaturated reactors by setting the reactors 2, 3, and 4 such that the inductances start to decrease after a point at which the current value exceeds a predetermined current value. In this case, it is possible to prevent the direct voltage from decreasing due to a voltage drop by the reactors 2, 3, and 4 when the voltage of the three-phase alternating current power supply 1 decreases under heavy load and such, as well as to prevent the input power factor from decreasing due to phase misalignment between the input current and the power supply voltage that occurs at the same time as the decrease of the direct voltage.

Further, according to the power supply apparatus of the first embodiment, the three reactors are provided for each of the main current path and the auxiliary current path. However, it is possible to use a three-phase reactor having a single iron core and windings on three legs of the iron core. Compared to the case in which using three single phase utilizing the fact that a total current of the three phases is zero, the three-phase reactor has a widely known advantage that an amount of the iron core to use to obtain an equal inductance is small, and effective for downsizing and weight reduction of an entire device.

(Second Embodiment)

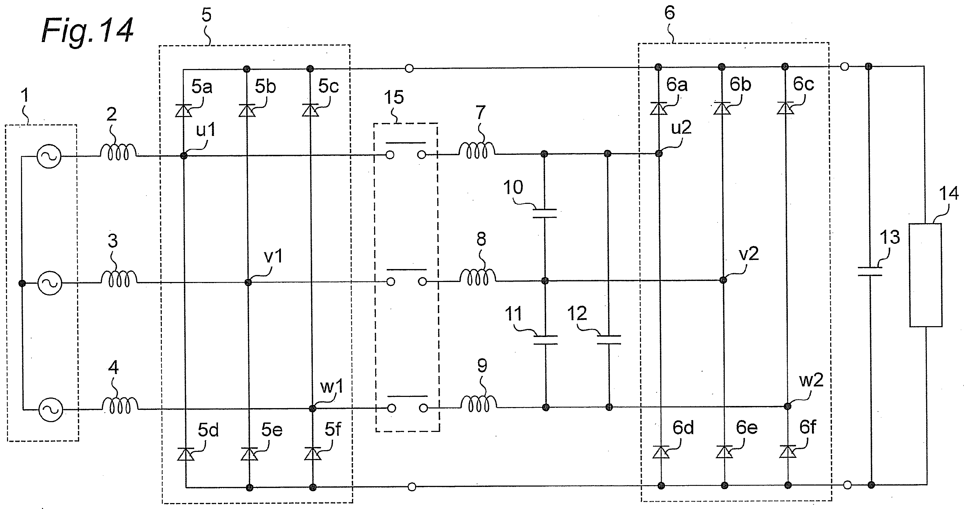

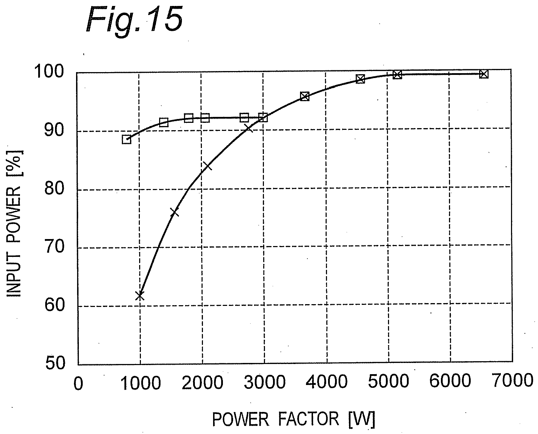

The following describes a power supply apparatus of a second embodiment according to the present invention with reference to Fig. 14 and Fig. 15. Fig. 14 is a circuit diagram illustrating a structure of the power supply apparatus of the second embodiment. As shown in Fig. 14, the power supply apparatus of the second embodiment is such that the circuit structure of the previously described power supply apparatus of the first embodiment is simply provided with a switching portion 15 between the alternating current input terminals u1, v1, and w1 of the diode bridge 5 and the reactors 7, 8, and 9 as switching means. According to the power supply apparatus of the second embodiment, the basic circuit operation is the same as that of the power supply apparatus of the first embodiment, but a different operation is carried out in an operational state under light load in which the load factor is low. The power supply apparatus of the second embodiment corresponds to a case of a light load state in which the load factor is low, and aims to improve the input power factor under light load.

According to the power supply apparatus of the second embodiment, when the basic circuit operation is continued while the switching portion 15 is closed, energy supplied in the constant current mode to the reactors 7, 8, and 9 exceeds energy consumed by the load 14 as the load becomes lighter. As a result, the current from the main current path that passes through the diode bridge 5 decreases. Specifically, as the diode bridge 5 is in a state that is the same as the diode bridge 5 is not conductive, a ratio of a leading current due to the capacitors 10, 11, and 12 to a conduction interval of the current that flows through the reactors 2, 3, and 4 increases.

This is apparent from the fact that, considering the state of no load, the current that flows through the reactors 2, 3, and 4 becomes a reactive current that only includes the resonant current of the reactors 7, 8, and 9 and the capacitors 10, 11, and 12.

Therefore, the power supply apparatus of the second embodiment is configured such that the reactors 7, 8, and 9, the capacitors 10, 11, and 12, and the diode bridge 6 are separated by opening the switching portion 15 during the operation under light load, thereby preventing the deterioration of the power factor under light load.

Fig. 15 is a characteristic chart showing relation between the input power (W) and the power factor (%) when the operation is carried out at the input power of 3 kW or smaller, in cases in which the switching portion 15 is open and not open. In Fig. 15, a measure point when the switching portion 15 is open is indicated by a square (□), and a measure point when the switching portion 15 is not open is indicated by a cross (x). As shown in Fig. 15, the deterioration of the power factor is prevented by opening the switching portion 15 under light load in which the input power is 3 kW or smaller.

As described above, according to the power supply apparatus of the second embodiment, it is possible to prevent the deterioration of the input power factor under light load by providing the switching portion 15.

(Third Embodiment)

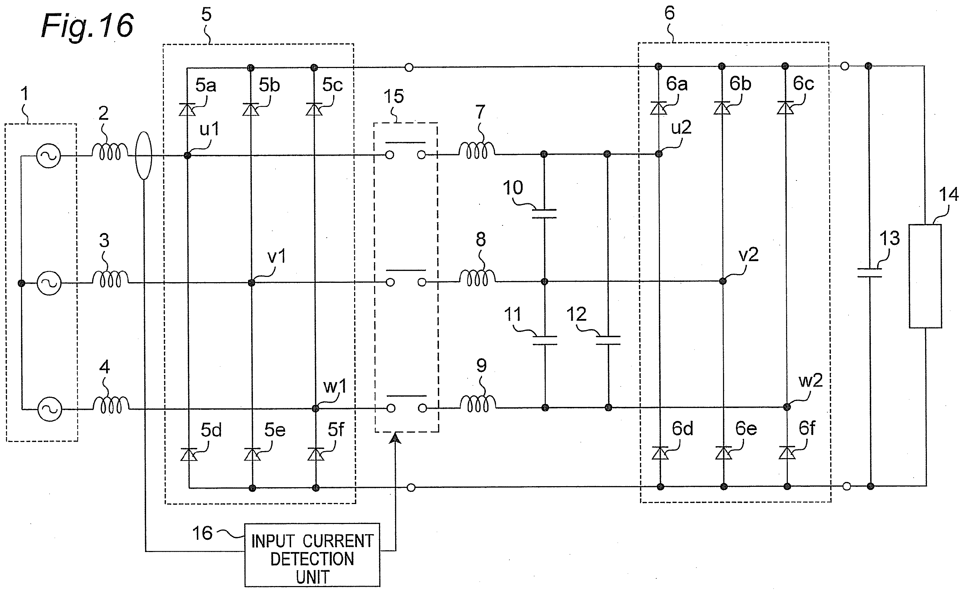

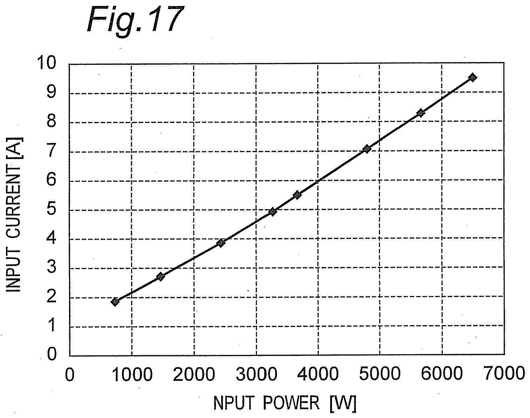

The following describes a power supply apparatus of a third embodiment according to the present invention with reference to Fig. 16 and Fig. 17. Fig. 16 is a circuit diagram illustrating a structure of the power supply apparatus of the third embodiment.

As shown in Fig. 16, the power supply apparatus of the third embodiment is configured such that the circuit structure of the power supply apparatus of the second embodiment is provided with an input current detection portion 16 as input current detection means. According to the power supply apparatus of the third embodiment, the basic circuit operation is the same as that of the power supply apparatus of the first embodiment, and the improvement of the input power factor under light load by opening the switching portion 15 is the same as that of the second embodiment. A characteristic of the power supply apparatus of the third embodiment is in that a timing of opening the switching portion 15 is determined based on the input current.

In the description of the power supply apparatus of the second embodiment, the improvement of the input power factor in the case in which the switching portion 15 is opened at the input power of about 3 kW as the light load has been described with reference to Fig. 15. Fig. 17 is a characteristic chart showing relation between the input power (W) and the input current (A) in the structure of the power supply apparatus of the first embodiment. As shown in Fig. 17, the input current is about 4.5 A at the input power of about 3 kW as the light load. Accordingly, in the power supply apparatus of the third embodiment, if conditions such as the constant number of the components are set to be the same as those of the power supply apparatus of the first embodiment, by configuring such that the switching portion 15 is open at the input current of about 4.5 A, an effect that is the same as that of the power supply apparatus of the second embodiment can be realized. Therefore, according to the power supply apparatus of the third embodiment, the input current is detected by the input current detection portion 16, and the switching portion 15 is opened automatically when the detected current exceeds a predetermined current value.

While the power supply apparatus of the third embodiment has been described taking the example in which the input current detection portion 16 is used, it is possible to provide an output power detection portion that detects the output power in place of the input current detection portion 16. In this case, it is controlled to open the switching portion 15 when the output power detection portion detects the output power of a predetermined value or smaller.

Further, it is possible to provide a direct current electricity detection portion that detects direct current electricity after rectification in place of the input current detection portion 16. In this case, it is controlled to open the switching portion 15 when the direct current electricity detection portion detects the direct current electricity of a predetermined value or smaller.

(Fourth Embodiment)

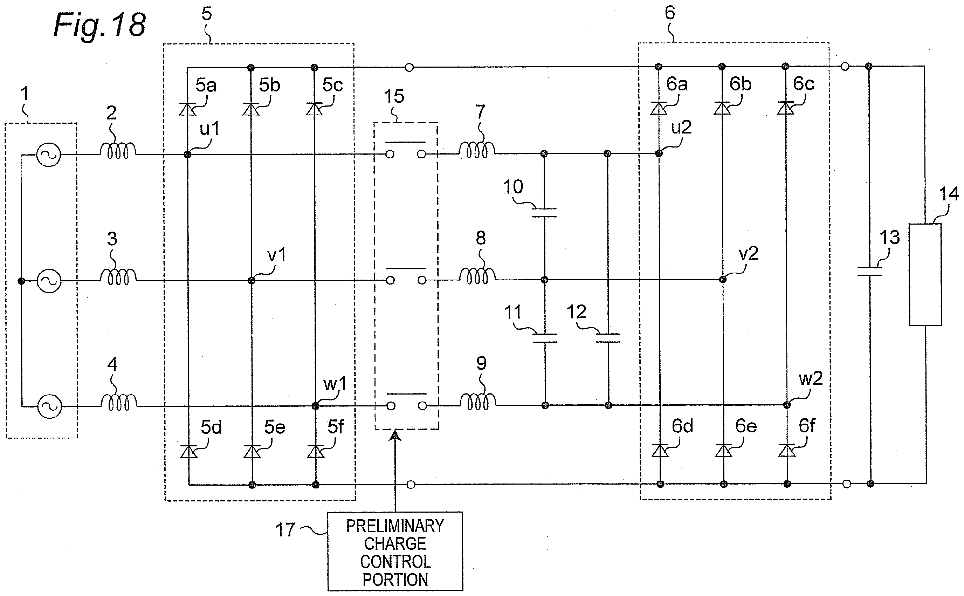

The following describes a power supply apparatus of a fourth embodiment according to the present invention with reference to Fig. 18. Fig. 18 is a circuit diagram illustrating a structure of the power supply apparatus of the fourth embodiment.

As shown in Fig. 18, the power supply apparatus of the fourth embodiment is configured such that the circuit structure of the power supply apparatus of the second embodiment is provided with a preliminary charge control portion 17 as preliminary charge control means that controls the switching portion 15.

According to the power supply apparatus of the fourth embodiment, the operation and the effect of the improvement of the input power factor in the basic circuit operation is the same as that of the power supply apparatus of the first embodiment. Further, the power supply apparatus of the fourth embodiment carries out the same operation and provides the same effect as the second embodiment in that the switching portion 15 is switched to the open state from a closed state which is the conductive state in order to improve the deterioration of the input power factor under light load.

A characteristic of the power supply apparatus of the fourth embodiment is in an operation of switching the switching portion 15 from the open state to the closed state when shifting from the operation state under light load to a normal operation. When simply closing the switching portion 15, an incoming current from the three-phase alternating current power supply 1 flows through the capacitors 10, 11, and 12, possibly causing deterioration of components having a contact point or meltdown of a fuse. The power supply apparatus of the fourth embodiment is provided to solve such a problem. Specifically, according to the power supply apparatus of the fourth embodiment, when switching the switching portion 15 from the open state to the closed state, it is controlled to gradually increase a time period of being closed (time period in the conductive state) by the preliminary charge control portion 17. According to the power supply apparatus of the fourth embodiment, the incoming current is prevented by controlling in this manner.

Further, it is possible to prevent the incoming current by various controls such as eventually changing a resistance value at a connecting point in the switching portion 15.

(Fifth Embodiment)

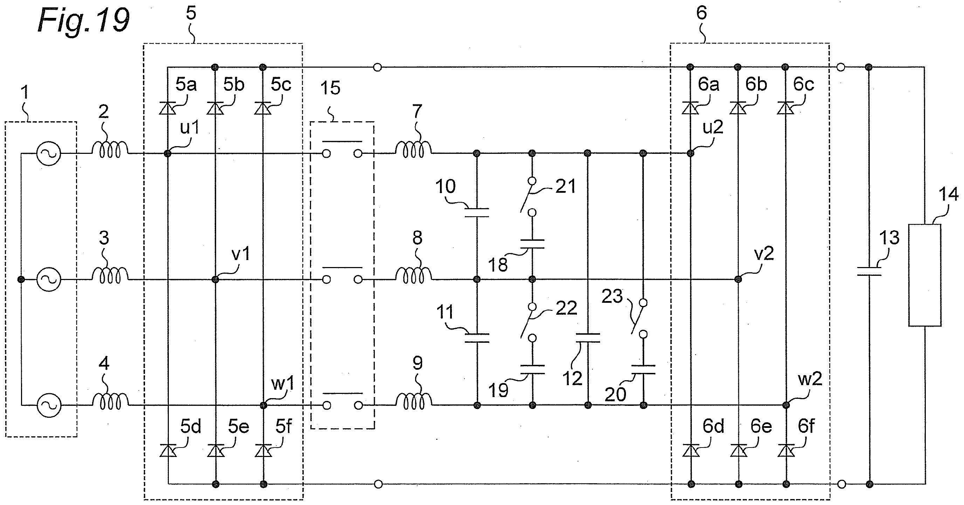

The following describes a power supply apparatus of a fifth embodiment according to the present invention with reference to Fig. 19. Fig. 19 is a circuit diagram illustrating a structure of the power supply apparatus of the fifth embodiment.

As shown in Fig. 19, the power supply apparatus of the fifth embodiment is such that the circuit structure of the power supply apparatus of the first embodiment is provided with additional capacitors 18, 19, and 20 as well as additional capacitor switching portions 21, 22, and 23. According to the power supply apparatus of the fifth embodiment, the operation and the effect of the improvement of the input power factor and the reduction of the harmonic current in the basic circuit operation is the same as the operation and the effect of the power supply apparatus of the first embodiment.

A characteristic of the power supply apparatus of the fifth embodiment is in advantageous effects of preventing a decrease in the direct voltage when the input voltage decreased or under heavy load, and of preventing decrease of the input power factor due to a phase-lag in the input current. Further characteristic of the power supply apparatus of the fifth embodiment is advantageous effects of preventing a direct current overvoltage under light load, and of preventing decrease of the input power factor due to a phase-lead in the input current.

According to the circuit structure of the previously described power supply apparatus of the first embodiment, by increasing the constant numbers of the capacitors 10, 11, and 12 in order to prevent the decrease in the direct voltage, it is possible to prevent the decrease in the direct voltage due to its vasopressor effect. However, this poses a problem that the direct voltage increases due to the operation of the capacitors 10, 11, and 12 under light load. Further, increasing the constant numbers of the capacitors 10, 11, and 12 poses another problem that the ratio of the leading phase current to the input current in the capacitor increases and the input power factor decreases. In contrast, according to the circuit structure of the power supply apparatus of the first embodiment, when the constant numbers of the capacitors 10, 11, and 12 are decreased, while it is possible to improve the input power factor under light load and to prevent the increase in the direct voltage, there is a problem that the phase of the input current is lagged and the input power factor is deteriorated under heavy load.

The power supply apparatus of the fifth embodiment is provided to solve such a problem, and, by operating the additional capacitor switching portions 21, 22, and 23 in response to the load amount, the additional capacitors 18, 19, and 20 are connected in parallel to the capacitors 10, 11, and 12, the decrease in the direct voltage is prevented, and the phase-lag in the input current is compensated, thereby improving the input power factor. Moreover, when the constant numbers of the capacitors 10, 11, and 12 are set to be around the rated electrical power such that the input power factor becomes maximum, it is possible to realize the advantageous effects of preventing the decrease in the direct voltage when the input voltage decreases and under heavy load, and of preventing the decrease in the input power factor due to the phase-lag in the input current. Further, when the constant numbers of the capacitors 10, 11, and 12 are set such that the input power factor becomes maximum under light load, it is possible to realize the advantageous effect of the improvement of the input power factor under light load.

(Sixth Embodiment)

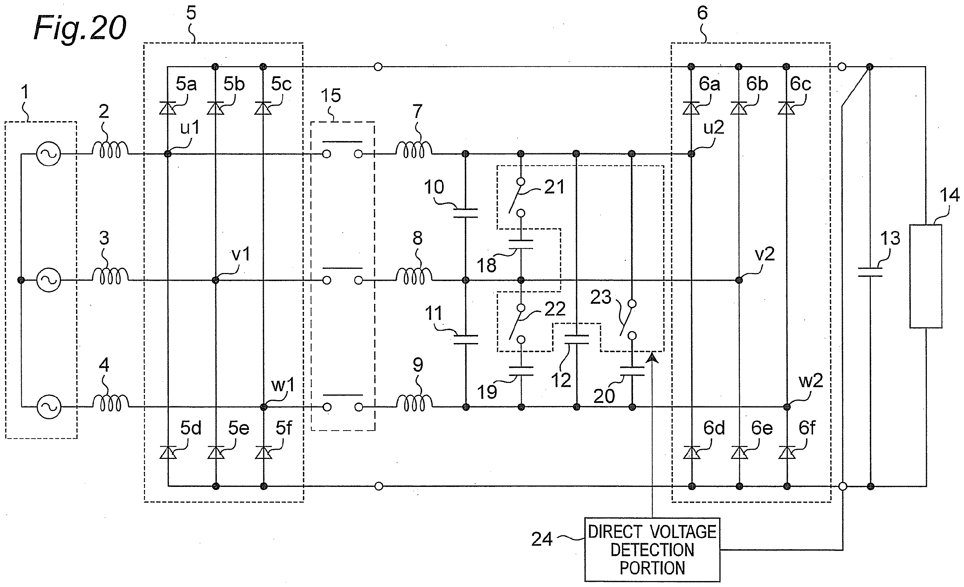

The following describes a power supply apparatus of a sixth embodiment according to the present invention with reference to Fig. 20. Fig. 20 is a circuit diagram illustrating a structure of the power supply apparatus of the sixth embodiment.

As shown in Fig. 20, the power supply apparatus of the sixth embodiment is such that the circuit structure of the power supply apparatus of the fifth embodiment is provided with a direct voltage detection portion 24. A basic operation in the power supply apparatus of the sixth embodiment is the same as the operation in the power supply apparatus of the fifth embodiment. Further, also in the power supply apparatus of the sixth embodiment, it is possible to obtain the same advantageous effect as in the power supply apparatus of the fifth embodiment by controlling the switching of the additional capacitors 18, 19, and 20 by the additional capacitor switching portions 21, 22, and 23. A characteristic of the power supply apparatus of the sixth embodiment is in that a timing of opening the additional capacitors 18, 21, and 20 is automatically controlled based on the direct voltages of the both end voltages of the electrolytic capacitor 13 as the smoothing capacitor.

The timing for opening the additional capacitors 18, 21, 20 can be controlled based on the input current instead of the direct voltage, or can be based on the direct current electricity. Alternatively, it is possible to realize the same advantageous effect by controlling the timing for opening the additional capacitors 18, 21, and 20 based on the output power.

(Seventh Embodiment)

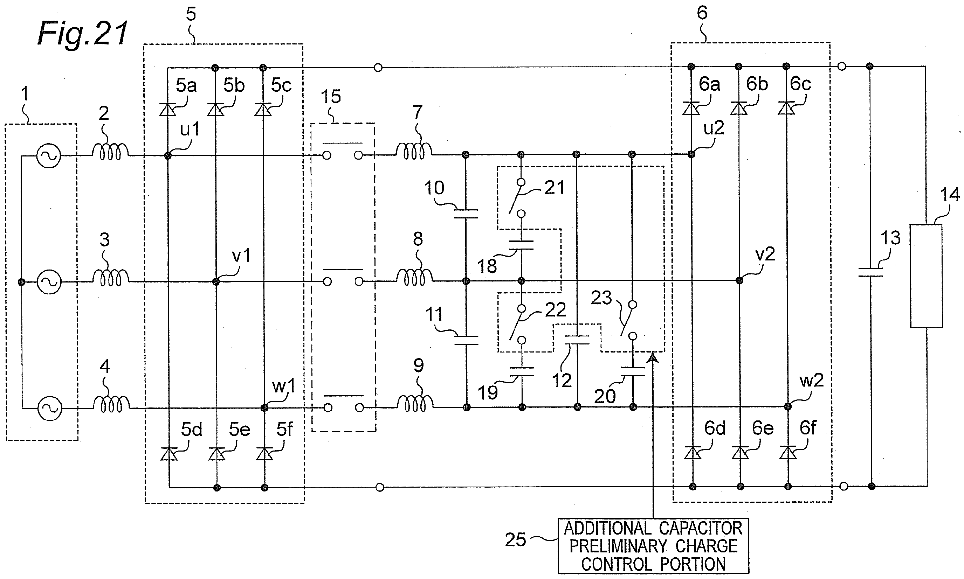

The following describes a power supply apparatus of a seventh embodiment according to the present invention with reference to Fig. 21. Fig. 21 is a circuit diagram illustrating a structure of the power supply apparatus of the seventh embodiment.

As shown in Fig. 21, the power supply apparatus of the seventh embodiment is such that the circuit structure of the power supply apparatus of the fifth embodiment is provided with an additional capacitor preliminary charge control portion 25 for controlling the additional capacitor switching portions 21, 22, and 23. According to the power supply apparatus of the seventh embodiment, the operation and the effect of the improvement of the input power factor and the preventing a direct current overvoltage is the same as the power supply apparatus of the fifth embodiment.

A characteristic of the power supply apparatus of the seventh embodiment is in an operation of switching the additional capacitor switching portions 21, 22, and 23 from the open state to the closed state. When simply closing the additional capacitor switching portions 21, 22, and 23, the incoming current from the three-phase alternating current power supply 1 flows through the additional capacitors 21, 22, and 23, possibly causing deterioration of components having a contact point or meltdown of the fuse. The power supply apparatus of the seventh embodiment aims to prevent the incoming current from the three-phase alternating current power supply 1 from flowing through the additional capacitors 21, 22, and 23 when closing the additional capacitor switching portions 21, 22, and 23. According to the power supply apparatus of the seventh embodiment, when switching the additional capacitor switching portions 21, 22, and 23 from the open state to the closed state, it is controlled by the additional capacitor preliminary charge control portion 25 to gradually increase a time period of being closed during which the additional capacitor switching portions 21, 22, and 23 are conductive, thereby preventing the incoming current.

Further, it is possible to prevent the incoming current by various controls such as eventually changing resistance values at connecting points in the additional capacitor switching portions 21, 22, and 23.

While the preferred embodiments of the invention have been described in detail to some extent, it should be appreciated that the disclosure of the preferred embodiments can be modified in their details, and combinations and orders of the components can be modified without departing the scope and the idea of the claimed invention.

INDUSTRIAL APPLICABILITY

The power supply apparatus according to the present invention provided as a direct current power supply apparatus or a power supply apparatus at a previous stage of a compressor driving device can reduce the harmonic current as well as to improve the input power factor, and can serve as a useful device that does not present any adverse effect in a power supply facility and a load system.

**Claims**

1.  A power supply apparatus, comprising:

    a three-phase alternating current power supply (1);
    first reactors (2, 3, 4) each provided for a corresponding phase of the three-phase alternating current power supply (1);
    a first diode bridge rectifier circuit (5) connected to the three-phase alternating current power supply (1) via the first reactors (2, 3, 4) and provided with a plurality of diodes (5a, 5b, 5c, 5d, 5e, 5f); and
    a smoothing capacitor (13) which is connected to direct current output terminals of the first bridge rectifier circuit (5) in parallel, and which is for supply of direct voltage to a load (14), **characterized in that** the power supply apparatus includes second reactors (7, 8, 9) respectively provided for alternating current input terminals ($u_1$, $v_1$, $w_1$) of corresponding phases of the first bridge rectifier circuit (5);
    a second diode bridge rectifier circuit (6) having alternating current input terminals ($u_2$, $v_2$, $w_2$) which are connected to the alternating current input terminals ($u_1$, $v_1$, $w_1$) of the first diode bridge rectifier circuit (5) via the second reactors (7, 8, 9), wherein the direct current output terminals of the first diode bridge rectifier circuit (5) are further connected to direct current output terminals of the second diode bridge rectifier circuit (6) in parallel, and configured to connect to a load (14) in parallel, and

wherein the power supply apparatus further comprises three capacitors (10, 11, 12) each of which is connected between a respective pair of terminals of the alternating current input terminals of the second diode bridge rectifier circuit, wherein the second reactors (7, 8, 9) and the capacitors (10, 11, 12) are provided between the alternating current input terminals ($u_1$, $v_1$, $w_1$) of the first diode bridge rectifier circuit (5) and the alternating current input terminals ($u_2$, $v_2$, $w_2$) of the second diode bridge rectifier circuit (6).

2. The power supply apparatus according to claim 1, wherein
a switching portion (15) is provided between the first diode bridge rectifier circuit (5) and each of the second reactors (7, 8, 9).

3. The power supply apparatus according to claim 2, comprising:

an input current detection portion (16), wherein
the switching portion (15) is configured to be controlled in response to an input current detected by the input current detection portion (16).

4. The power supply apparatus according to claim 2, comprising:

an output power detection portion, wherein
the switching portion (15) is configured to be controlled according to an output power detected by the output power detection portion.

5. The power supply apparatus according to claim 2, comprising:

a direct current electricity detection portion (24) that detects a current flowing to the load, wherein
the switching portion (21, 22, 23) is configured to be controlled in response to the direct current electricity detected by the direct current electricity detection portion (24).

6. The power supply apparatus according to claim 2, comprising:

a preliminary charge control portion, wherein
the switching portion (15) is configured to be controlled by the preliminary charge control portion so as to reduce a current flowing through the three capacitors (10, 11, 12) when switching on the switching portion (15).

7. The power supply apparatus according to claim 2, wherein
a series circuit including an additional capacitor (18, 19, 20) and an additional capacitor switching portion (21, 22, 23) is provided between each respective pair of terminals of the alternating current input terminals of the second diode bridge rectifier circuit (6), and
the series circuits are connected in parallel with the respective capacitors (10, 11, 12) connected to the alternating current input terminals of the second diode bridge rectifier circuit

8. The power supply apparatus according to claim 7, comprising:

a direct current voltage detection portion (24) configured to detect voltages on both ends of the load (14), wherein
the additional capacitor switching portion (21, 22, 23) is configured to be controlled in response to the direct current voltages detected by the direct current voltage detection portion (24).

9. The power supply apparatus according to claim 7, comprising:

an input current detection portion, wherein
the additional capacitor switching portion (21, 22, 23) is configured to be controlled in response to an input current detected by the input current detection portion.

10. The power supply apparatus according to claim 7, comprising:

an output power detection portion, wherein
the additional capacitor switching portion (21, 22, 23) is configured to be controlled in response to an output power detected by the output power detection portion.

**11.** The power supply apparatus according to claim 7, comprising:

a direct current electricity detection portion (24), wherein
the additional capacitor switching portion (21, 22, 23) is configured to be controlled in response to a direct current electricity detected by the direct current electricity detection portion (24).

**12.** The power supply apparatus according to claim 7, comprising:

an additional capacitor preliminary charge control portion, wherein
the additional capacitor switching portion (21, 22, 23) is configured to be controlled by the additional capacitor preliminary charge control portion so as to reduce a current flowing through the additional capacitors (18, 19, 20) when switching on the additional capacitor switching portion (21, 22, 23).

**13.** The power supply apparatus according to claim 1, wherein
a reactor having a saturation characteristic such that an inductance of the reactor decreases in response to a current flowing through the reactor when the current that flowing through the reactor exceeds a predetermined value is used as the first reactor (2, 3, 4).

**14.** The power supply apparatus according to claim 1, wherein
a three-phase reactor configured by an iron core and a winding on each of three legs of the iron core is used as the first and second reactors (2, 3, 4, 7, 8, 9).

**Patentansprüche**

**1.** Stromversorgungsvorrichtung, umfassend:

eine Dreiphasen-Wechselstromversorgung (1);
erste Drosselspulen (2, 3, 4), jede vorgesehen für eine entsprechende Phase der Dreiphasen-Wechselstromversorgung (1);
einen ersten Dioden-Brückengleichrichter-Schaltkreis (5), der über die ersten Drosselspulen (2, 3, 4) mit der Dreiphasen-Wechselstromversorgung (1) verbunden ist und in dem eine Vielzahl von Dioden (5a, 5b, 5c, 5d, 5e, 5f) vorgesehen ist; und;
einen Glättungskondensator (13), der parallel mit den Gleichstrom-Ausgangsanschlüssen des ersten Brückengleichrichter-Schaltkreises (5) verbunden ist, und der zum Liefern von Gleichspannung an eine Last (14) dient, **dadurch gekennzeichnet, dass**
die Stromversorgungsvorrichtung umfasst
zweite Drosselspulen (7, 8, 9), die jeweils für Wechselstrom-Eingangsanschlüsse ($u_1$, $v_1$, $w_1$) entsprechender Phasen des ersten Brückengleichrichter-Schaltkreises (5) vorgesehen sind;
einen zweiten Dioden-Brückengleichrichter-Schaltkreises (6) mit Wechselstrom-Eingangsanschlüssen ($u_2$, $v_2$, $w_2$), die mit den Wechselstrom-Eingangsanschlüssen ($u_1$, $v_1$, $w_1$) des ersten Dioden-Brückengleichrichter-Schaltkreises (5) über zweite Drosselspulen (7, 8, 9) verbunden sind, wobei die Gleichstrom-Ausgangsanschlüsse des ersten Dioden-Brückengleichrichter-Schaltkreises (5) ferner parallel mit Gleichstrom-Ausgangsanschlüssen des zweiten Dioden-Brückengleichrichter-Schaltkreises (6) verbunden und gestaltet sind, parallel mit einer Last (14) verbunden zu sein, und
wobei die Stromversorgungsvorrichtung ferner drei Kondensatoren (10, 11, 12) umfasst, von denen jeder zwischen einem entsprechenden Paar von Anschlüssen der Wechselstrom-Eingangsanschlüsse des zweiten Dioden-Brückengleichrichter-Schaltkreises angeschlossen ist,
wobei die zweiten Drosselspulen (7, 8, 9) und die Kondensatoren (10, 11, 12) zwischen den Wechselstrom-Eingangsanschlüssen ($u_1$, $v_1$, $w_1$) des ersten Dioden-Brückengleichrichter-Schaltkreises (5) und den Wechselstrom-Eingangsanschlüssen ($u_2$, $v_2$, $w_2$) des zweiten Dioden-Brückengleichrichter-Schaltkreises (6) vorgesehen sind.

**2.** Stromversorgungsvorrichtung nach Anspruch 1, wobei ein Schaltteil (15) zwischen dem ersten Dioden-Brückengleichrichter-Schaltkreis (5) und jeder der zweiten Drosselspulen (7, 8, 9) vorgesehen ist.

**3.** Stromversorgungsvorrichtung nach Anspruch 2, umfassend:

einen Eingangsstrommessteil (16), wobei
der Schaltteil (15) gestaltet ist, als Reaktion auf einen Eingangsstrom gesteuert zu werden, der vom Eingangsstrommessteil (16) gemessen wird.

4. Stromversorgungsvorrichtung nach Anspruch 2, umfassend:

einen Ausgangsleistungsmessteil, wobei
der Schaltteil (15) gestaltet ist, entsprechend einer Ausgangsleistung gesteuert zu werden, die vom Ausgangsleistungsmessteil gemessen wird.

5. Stromversorgungsvorrichtung nach Anspruch 2, umfassend:

einen Gleichstrommessteil (24), der einen Strom misst, der zur Last fließt, wobei
der Schaltteil (21, 22, 23) gestaltet ist, als Reaktion auf den Gleichstrom gesteuert zu werden, der vom Gleichstrommessteil (24) gemessen wird.

6. Stromversorgungsvorrichtung nach Anspruch 2, umfassend:

einen Vorlade-Steuerteil, wobei
der Schaltteil (15) gestaltet ist, vom Vorlade-Steuerteil gesteuert zu werden, um einen Strom zu verringern, der durch die drei Kondensatoren (10, 11, 12) fließt, wenn der Schaltteil (15) eingeschaltet wird.

7. Stromversorgungsvorrichtung nach Anspruch 2, wobei
ein Serien-Schaltkreis, der einen zusätzlichen Kondensator (18, 19, 20) und einen zusätzlichen Kondensator-Schaltteil (21, 22, 23) enthält, zwischen jedem entsprechenden Paar von Anschlüssen der Wechselstrom-Eingangsanschlüsse des zweiten Dioden-Brückengleichrichter-Schaltkreises (6) vorgesehen ist, und
die Serien-Schaltkreise parallel mit den jeweiligen Kondensatoren (10, 11, 12) verbunden sind, die mit den Wechselstrom-Eingangsanschlüssen des zweiten Dioden-Brückengleichrichter-Schaltkreises (6) verbunden sind.

8. Stromversorgungsvorrichtung nach Anspruch 7, umfassend:

einen Gleichspannungsmessteil (24), der gestaltet ist, Spannungen an beiden Enden der Last (14) zu messen, wobei
der zusätzliche Kondensator-Schaltteil (21, 22, 23) gestaltet ist, als Reaktion auf die Gleichspannung gesteuert zu werden, die vom Gleichspannungsmessteil (24) gemessen wird.

9. Stromversorgungsvorrichtung nach Anspruch 7, umfassend:

einen Eingangsstrommessteil, wobei
der zusätzliche Kondensator-Schaltteil (21, 22, 23) gestaltet ist, als Reaktion auf einen Eingangsstrom gesteuert zu werden, der vom Eingangsstrommessteil gemessen wird.

10. Stromversorgungsvorrichtung nach Anspruch 7, umfassend:

einen Ausgangsleistungsmessteil, wobei
der zusätzliche Kondensator-Schaltteil (21, 22, 23) gestaltet ist, als Reaktion auf eine Ausgangsleistung gesteuert zu werden, die vom Ausgangsleistungsmessteil gemessen wird.

11. Stromversorgungsvorrichtung nach Anspruch 7, umfassend:

einen Gleichstrommessteil (24), wobei
der zusätzliche Kondensator-Schaltteil (21, 22, 23) gestaltet ist, als Reaktion auf einen Gleichstrom gesteuert zu werden, der vom Gleichstrommessteil (24) gemessen wird.

12. Stromversorgungsvorrichtung nach Anspruch 7, umfassend:

einen zusätzlichen Kondensator-Vorlade-Steuerteil, wobei
der zusätzliche Kondensator-Schaltteil (21, 22, 23) gestaltet ist, vom zusätzlichen Kondensator-Vorlade-Steuerteil gesteuert zu werden, um einen Strom zu verringern, der durch die zusätzlichen Kondensatoren (18, 19, 20) fließt, wenn der zusätzliche Kondensator-Schaltteil (21, 22, 23) eingeschaltet wird.

**13.** Stromversorgungsvorrichtung nach Anspruch 1, wobei eine Drosselspule mit einer Sättigungscharakteristik, so dass eine Induktivität der Drosselspule sich als Reaktion auf einen Strom verringert, der durch die Drosselspule fließt, wenn der Strom, der durch die Drosselspule fließt, einen vorgegebenen Wert übersteigt, als erste Drosselspule (2, 3, 4) verwendet wird.

**14.** Stromversorgungsvorrichtung nach Anspruch 1, wobei eine Dreiphasen-Drosselspule, die durch einen Eisenkern und eine Wicklung auf jedem von drei Schenkeln des Eisenkerns gestaltet ist, als erste und zweite Drosselspule (2, 3, 4, 7, 8, 9) verwendet wird.

**Revendications**

**1.** Appareil d'alimentation électrique, comprenant:

une alimentation (1) de courant électrique alternatif triphasé;
de premiers réacteurs (2, 3, 4) fournis chacun pour une phase correspondante de l'alimentation (1) de courant électrique alternatif triphasé;
un premier circuit redresseur en pont (5) à diode connecté à l'alimentation (1) de courant électrique alternatif triphasé via les premiers réacteurs (2, 3, 4) et équipé d'une multitude de diodes (5a, 5b, 5c, 5d, 5e, 5f); et
un condensateur de lissage (13) qui est connecté en parallèle aux bornes de sortie de courant continu du premier circuit redresseur en pont (5), et qui est prévu pour l'alimentation d'une tension continue à une charge (14), **caractérisé en ce que**
l'appareil d'alimentation électrique comprend de seconds réacteurs (7, 8, 9) fournis respectivement pour les bornes d'entrée ($u_1$, $v_1$, $w_1$) de courant alternatif de phases correspondantes du premier circuit redresseur en pont (5);
un second circuit redresseur en pont (6) à diode possédant des bornes d'entrée ($u_2$, $v_2$, $w_2$) de courant alternatif qui connectées aux bornes d'entrée ($u_1$, $v_1$, $w_1$) de courant alternatif du premier circuit redresseur en pont (5) à diode via les seconds réacteurs (7, 8, 9), dans lequel les bornes de sortie de courant continu du premier circuit redresseur en pont (5) à diode sont en outre connectées en parallèle à des bornes de sortie de courant direct du second circuit redresseur en pont (6) à diode, et
configurées pour connecter en parallèle une charge (14), et
dans lequel l'appareil d'alimentation électrique comprend en outre trois condensateurs (10, 11, 12), chacun d'eux étant connecté entre une paire de bornes respectives des bornes d'entrée de courant alternatif du second circuit redresseur en pont à diode,
dans lequel les seconds réacteurs (7, 8, 9) et les condensateurs (10, 11, 12) sont fournis entre les bornes d'entrée ($u_1$, $v_1$, $w_1$) de courant alternatif du premier circuit redresseur en pont (5) à diode et les bornes d'entrée ($u_2$, $v_2$, $w_2$) de courant alternatif du second circuit redresseur en pont (6) à diode.

**2.** Appareil d'alimentation électrique selon la revendication 1, dans lequel une section de commutation (15) est fournie entre le premier circuit redresseur en pont (5) à diode et chacun des seconds réacteurs (7, 8, 9).

**3.** Appareil d'alimentation électrique selon la revendication 2, comprenant:

une section de détection (16) de courant d'entrée, sachant que
la section de commutation (15) est configurée pour être commandée en réponse à un courant d'entrée détecté par la section de détection (16) de courant d'entrée.

**4.** Appareil d'alimentation électrique selon la revendication 2, comprenant:

une section de détection de courant de sortie, sachant que
la section de commutation (15) est configurée pour être commandée en fonction d'un courant de sortie détecté par la section de détection de courant de sortie.

**5.** Appareil d'alimentation électrique selon la revendication 2, comprenant:

une section de détection (24) de courant électrique continu qui détecte un courant circulant vers la charge, sachant que

la section de commutation (21, 22, 23) est configurée pour être commandée en réponse au courant électrique continu détecté par la section de détection (24) de courant électrique continu.

6.   Appareil d'alimentation électrique selon la revendication 2, comprenant:

une section de contrôle de charge préliminaire, dans lequel

la section de commutation (15) est configurée pour être commandée par la section de contrôle de charge préliminaire de manière à réduire un courant circulant a travers les trois condensateurs (10, 11, 12) lors de la commutation sur la section de commutation (15).

7.   Appareil d'alimentation électrique selon la revendication 2, dans lequel

un circuit en série comprenant un condensateur supplémentaire (18, 19, 20) et une section de commutation (21, 22, 23) de condensateur supplémentaire est fournie entre chaque paire de bornes respective des bornes d'entrée de courant alternatif du second circuit redresseur en pont (6) à diode, et

les circuits en série sont connectés en parallèle aux condensateurs (10, 11, 12) respectifs connectés aux bornes d'entrée de courant alternatif du second circuit redresseur en pont (6) à diode.

8.   Appareil d'alimentation électrique selon la revendication 7, comprenant:

une section de détection (24) de tension de courant continu configurée pour détecter des tensions aux deux extrémités de la charge (14), sachant que

la section de commutation (21, 22, 23) de condensateur supplémentaire est configurée pour être commandée en réponse aux tensions de courant continu détectées par la section de détection (24) de tension de courant continu.

9.   Appareil d'alimentation électrique selon la revendication 7, comprenant:

une section de détection de courant d'entrée, sachant que

la section de commutation (21, 22, 23) de condensateur supplémentaire est configurée pour être commandée en réponse à un courant d'entrée détecté par la section de détection de courant d'entrée.

10.   Appareil d'alimentation électrique selon la revendication 7, comprenant:

une section de détection de courant de sortie, sachant que

la section de commutation (21, 22, 23) de condensateur supplémentaire est configurée pour être commandée en réponse à un courant de sortie détecté par la section de détection de courant de sortie.

11.   Appareil d'alimentation électrique selon la revendication 7, comprenant:

une section de détection (24) de courant électrique continu, dans lequel

la section de commutation (21, 22, 23) de condensateur supplémentaire est configurée pour être commandée en réponse à un courant électrique continu détecté par la section de détection (24) de courant électrique continu.

12.   Appareil d'alimentation électrique selon la revendication 7, comprenant:

une section de contrôle de charge de condensateur préliminaire supplémentaire, dans lequel

la section de commutation (21, 22, 23) de condensateur supplémentaire est configurée pour être commandée par la section de contrôle de charge de condensateur préliminaire supplémentaire de manière à réduire un courant circulant à travers les condensateurs (18, 19, 20) supplémentaires lors de la commutation sur la section de commutation (21, 22, 23) de condensateur supplémentaire.

13.   Appareil d'alimentation électrique selon la revendication 1, dans lequel un réacteur possédant une caractéristique de saturation telle qu'une inductance du réacteur décroisse en réponse à un courant circulant à travers le réacteur lorsque le courant qui circule à travers le réacteur dépasse une valeur prédéterminée, est utilisé en tant que le premier réacteur (2, 3, 4).

**14.** Appareil d'alimentation électrique selon la revendication 1, dans lequel un réacteur triphasé configuré par un noyau en fer et un enroulement sur chacune de trois pattes du noyau en fer est utilisé en tant que les premier et second réacteurs (2, 3, 4, 7, 8, 9).

*Fig.1*

EP 2 221 953 B1

*Fig.2*

## Fig.3

# Fig.4

Fig.5

TIME t0

EP 2 221 953 B1

Fig.6

TIMES t1~t2

FROM Vdc TO "0"

FROM "0" TO Vdc

Vdc

1  2  3  4  5  6  7  8  9  10  11  12  13  14

5b  5f  6b  6f

u2  v2  w2  v1  w1

Fig.7

TIME t2

EP 2 221 953 B1

Fig.8
TIME t3

EP 2 221 953 B1

Fig.9

TIME t4

FROM "0"
TO Vdc

FROM Vdc
TO "0"

Vdc

EP 2 221 953 B1

Fig.10

TIME t5

EP 2 221 953 B1

31

*Fig.11*

*Fig.12*

Fig.13

U PHASE VOLTAGE/U PHASE CURRENT

eu

Iu

TIME

33

Fig.14

## Fig.15

Fig.16

EP 2 221 953 B1

INPUT CURRENT
DETECTION
UNIT

Fig.17

Fig.18

Fig.19

Fig.20

DIRECT VOLTAGE
DETECTION
PORTION

Fig.21

*Fig.22*

# Fig.23

## Fig.24

(a) (t0~tc)

(b) (tc~t1)

(c) (t1~t2)

(d) (t2~t3)

(e) (t3~t4)

Fig.25

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002369530 A

- US 20030053324 A1